(19) Europäisches Patentamt / European Patent Office / Office européen des brevets

(11) **EP 4 421 114 A1**

(12) **EUROPEAN PATENT APPLICATION**

(43) Date of publication:
**28.08.2024   Bulletin 2024/35**

(21) Application number: **23157681.0**

(22) Date of filing: **21.02.2023**

(51) International Patent Classification (IPC):
**C08J 9/00** (2006.01)          **C08L 25/04** (2006.01)
**C08J 9/12** (2006.01)          **C08J 9/14** (2006.01)

(52) Cooperative Patent Classification (CPC):
**C08J 9/0061; B29C 44/00;** C08J 9/122;
C08J 9/127; C08J 9/141; C08J 9/142;
C08J 2201/03; C08J 2203/06; C08J 2203/12;
C08J 2203/14; C08J 2203/202; C08J 2325/06;
C08J 2425/06; C08J 2427/18; C08L 25/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SHPP Global Technologies B.V.
4612 PX Bergen op Zoom (NL)**

(72) Inventor: **Vandormael, Bart
4612 PX Bergen op Zoom (NL)**

(74) Representative: **Modiano, Gabriella Diana et al
Modiano & Partners (DE)
Steinsdorfstrasse, 14
80538 München (DE)**

(54) **HIGH FLOW POLYSTYRENE RESINS, COMPOSITIONS THEREOF AND METHODS OF MAKING**

(57)     A polymer composition includes: a matrix polymer component including a polystyrene polymer; and 0.005 wt% to 9 wt. %, based on the weight of the polymer composition, of a fluoropolymer component including a fibrillated fluoropolymer, a fibrillated fluoropolymer encapsulated by an encapsulating polymer, or a combination thereof. The polystyrene polymer has a molecular weight below 193,000 grams per mole (g/mol) as determined according to gel permeation chromatography (GPC) using polystyrene standards. The polystyrene polymer has a Vicat softening temperature above 90 °C as tested in accordance with ISO 306/B50, and the polymer composition has a tensile modulus between 3300 and 3800 Megapascals (MPa) as tested in accordance with ISO 527. Methods for forming the polymer composition include passing a molten feed composition including the matrix polymer component and the fluoropolymer component through a die to form the polymer composition.

FIG. 1

**Description**

**FIELD OF THE DISCLOSURE**

The present disclosure relates to polymer compositions, and more particularly to polystyrene polymer compositions that include a fluoropolymer component including a fibrillated fluoropolymer.

**BACKGROUND OF THE DISCLOSURE**

Nanofibrillated polytetrafluoroethylene (PTFE) provides improved mechanical properties to polymer blends such as increased modulus, strength, ductility and viscoelasticity. To maximize the degree of PTFE nanofibrillation in a thermoplastic resin during extrusion without agglomeration, a specific die design and process window have been used. More specifically, lower throughputs and high melt temperature have been used to maximize nanofibrillation, which unfortunately results in unfavorable manufacturing economics. For semi-crystalline resins (e.g. polyethylene terephthalate (PET), polypropylene (PP), polylactic acid (PLA), and polyamide (PA)) - which inherently have lower viscosities - these disadvantages are not as pronounced. However, for amorphous resins such as polystyrene, a base resin with optimal viscosity is required to enable higher throughput and ensure efficient nanofibrillation during industrial extrusion processes. In particular, because use of polystyrene resins with higher flow properties (lower viscosity, lower molecular weight) affects its mechanical properties, there is a need for high flow polystyrene resins with improved mechanical properties.

Additionally, due to new environmental policies there is a need for carbon dioxide ($CO_2$) emission reductions across a wide range of industries. More specifically, for transportation, logistics and mobility industries there is a need for lightweight structures to reduce fuel consumption, increase energy efficiency, or improve payload capability of the vehicle. For example, refrigerated trucks or caravans may include structural and insulative extruded polystyrene (XPS) foam panels in their flooring, walls and/or roof. Various XPS panels exist in the market with varying compressive strengths, foam density, flame retardant properties and dimensions (thickness, width and length); selection of the suitable XPS panel is dependent on application requirements. In particular, thin XPS foams having a thickness of 10-50 millimeters (mm) and having a compressive strength of 500-700 kilopascals (kPa) and a foam density of from 35-38 kilograms per cubic meter ($kg/m^3$) are being used in some applications. Conventional XPS foams are available from, e.g., Ravage (Ravatherm™ XPS foams) and JACKON (JACKODUR® XPS foams).

It is also desirable to reduce the energy footprint in residential construction through use of floor and/or wall insulation. During new construction or refurbishments, thin XPS foam boards are ideally suited for indoor moisture environments such as bathrooms and shower areas. However, it is difficult to produce thin (4-20 mm thick) and wide (900-1200 mm width) XPS boards that have a compressive strength of 300 kPa or higher due to processing inconsistency challenges (surface quality, cell size uniformity) caused by the limitations of the conventional talc foaming nucleant. More specifically, talc masterbatches cannot adequately control foam morphology, resulting in nonuniform cell size, higher thickness due to expansion, higher width due to necking at the die exit, and poor foam skin appearance. Conventional foaming nucleants such as talc masterbatches (40-60 wt% of talc in a polystyrene (PS) matrix) are typically dosed up to 1.5 percent, but they do not satisfy the previously described width, thickness and performance criteria. Higher talc foam nucleation dosages of up to 10 wt% have been reported, but these foams do not satisfy the desired size and performance criteria described above. See, e.g.: (1) Demirtas et al., "Extrusion Foaming of High Impact Polystyrene: Effects of Processing Parameters and Materials Composition," Int J Mater Sci Res. 2018, 1(1): 9-15; and (2) U.S. Patent No. 10,160,843, "Nucleation efficiency of talc in the foaming behaviour and cellular structure of polymer-based foams," granted December 25, 2018. Conventional construction boards are available from JACKON (JACKOBOARD® Plano construction board). Conventional XPS foams suffer from one or more various shortcomings, however. Accordingly, there is a need for new compositions and processes which allow for the production of thin, wide and strong XPS foams.

These and other shortcomings are addressed by aspects of the disclosure.

**SUMMARY**

Aspects of the disclosure relate to a polymer composition including: a matrix polymer component including a polystyrene polymer; and 0.005 wt% to 9 wt. %, based on the weight of the polymer composition, of a fluoropolymer component including a fibrillated fluoropolymer, a fibrillated fluoropolymer encapsulated by an encapsulating polymer, or a combination thereof. The polystyrene polymer has a molecular weight below 193,000 grams per mole (g/mol) as determined according to gel permeation chromatography (GPC) using polystyrene standards. The polystyrene polymer has a Vicat softening temperature above 90 °C as tested in accordance with ISO 306/B50, and the polymer composition has a tensile modulus between 3300 and 3800 Megapascals (MPa) as tested in accordance with ISO 527.

Aspects of the disclosure further relate to methods for forming the polymer composition, the method including passing a molten feed composition including the matrix polymer component and the fluoropolymer component through a die to form the polymer composition. The die includes: (a) an entrance section including at least one inlet; (b) an orientation section, the inlet being in fluid communication with the orientation section, the orientation section including a plurality of orientation channels having a channel inlet and a channel outlet; (c) a merging region defining a receiving volume in fluid communication with the outlets of the plurality of orientation channels of the orientation section, the merging region being configured to merge together at least some fluid flows originating from the outlets of the orientation channels of the orientation section; and (d) an exit region in fluid communication with the merging region, the exit region including at least one outlet. At least some of the plurality of orientation channels independently have an elongation ratio of between 2 and 45, the elongation ratio being defined as a ratio of a cross-sectional area of the channel inlet to a cross-sectional area of the channel outlet, and wherein the orientation channels include a hyperbolic-shaped region and a linearly-tapered region.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 provides an exterior view of an exemplary die according to aspects of the present disclosure.
FIG. 2 provides a cutaway view of the die of FIG. 1.
FIG. 3 provides exemplary velocity profiles of an orientation channel according to existing technologies (left) and an orientation channel having a flow profile with a hyperbolic geometry and according to the present disclosure (right).
FIG. 4 provides exterior views of the two orientation channels shown in FIG. 3.
FIG. 5 shows an exemplary die that may be used in combination with a die holder according to the present disclosure.
FIGS. 6A and 6B are side and top views, respectively, of an exemplary die holder according to the present disclosure.
FIG. 7A shows an extruder die head with a breaker-plate removed.
FIG. 7B shows an extruder die head with a breaker-plate inserted.
FIG. 8 is a graph presenting data from Tables 6A, 6B, 7A, and 7B showing the effect of nanofibrillated masterbatch type and loading on the specific compressive strength of XPS foams.
FIG. 9 is a graph presenting data from Tables 6A, 6B, 7A, and 7B showing the effect of nanofibrillated masterbatch type on compressive strength and density of XPS foams.
FIG. 10 is a graph presenting data from Tables 9A and 9B showing the effect of nanofibrillated PTFE nucleant on compressive strength and density of XPS foams.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

## Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polystyrene polymer" includes mixtures of two or more polystyrene polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined

for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_W = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Polymer Compositions

Aspects of the disclosure relate to a polymer composition including: a matrix polymer component including a polystyrene polymer; and 0.005 wt% to 9 wt. %, based on the weight of the polymer composition, of a fluoropolymer component including a fibrillated fluoropolymer, a fibrillated fluoropolymer encapsulated by an encapsulating polymer, or a combination thereof. The polystyrene polymer has a molecular weight below 193,000 grams per mole (g/mol) as determined according to gel permeation chromatography (GPC) using polystyrene standards. The polystyrene polymer has a Vicat softening temperature above 90 °C as tested in accordance with ISO 306/B50. The polymer composition has a tensile modulus between 3300 and 3800 Megapascals (MPa) as tested in accordance with ISO 527.

"Fibrillation" and "fibrillated" are terms of art that refer to the treatment of fluoropolymers so as to produce, for example, a "node and fibril," network, or cage-like structure. In one aspect, the fluoropolymer includes fibrils having an average diameter of 5 nanometers (nm) to 2 micrometers (micron, $\mu$m), or from about 5 nm to about 2 micron ($\mu$m). The fluoropolymer may also have an average fibril diameter of 30 nanometers to 750 nanometers, more specifically 5 nanometers to 500 nanometers. In a further example, the fluoropolymer may also have an average fibril diameter of about 30 nanometers to about 750 nanometers, more specifically about 5 nanometers to about 500 nanometers. Field Emission Scanning Electron Microscopy can be employed to observe the extent of fibrillation of the fluoropolymer throughout the matrix polymer in the fibrillated compositions.

The polystyrene polymer may include in some aspects general purpose polystyrene (GPPS), wherein the GPPS is derived from a styrene monomer. In certain aspects the polystyrene polymer includes a polystyrene copolymer, wherein the polystyrene copolymer includes at a styrene monomer, a substituted styrene compound, a conjugated 1,3-diene, a metallic comonomer, or a combination thereof. The metallic comonomer may include, but is not limited to: zinc diacrylate; zinc dimethacrylate; zinc di-vinylacetate; zinc di-ethylfumarate; copper diacrylate; copper dimethacrylate; copper di-vinylacetate; copper di-ethylfumarate; aluminum (III) isopropoxide; aluminum triacrylate; aluminum trimethacrylate; aluminum tri-vinylacetate; aluminum tri-ethylfumarate; zirconium tetraacrylate; zirconium tetramethacrylate; zirconium tetra-vinylacetate; zirconium tetra-ethylfumarate; zirconium (IV) butoxide; or combinations thereof.

In particular aspects the polystyrene copolymer is a styrenic co-polymer resulting from polymerization of a reaction mixture including a styrene monomer and from 0.5 to 20 wt % of a polar co-monomer including an alkyl methacrylate. Exemplary styrene monomers include, but are not limited to styrene, alpha-methyl styrene, vinyl toluene, p-methyl styrene, t-butyl styrene, o-chlorostyrene, vinyl pyridine, and combinations thereof. Such polystyrene copolymers are described in, e.g., US Patent No. 9,914,814, the disclosure of which is incorporated herein in its entirety.

As noted the composition includes from 0.005 wt% to 9 wt. %, based on the weight of the polymer composition, of the fluoropolymer component. In some aspects the composition includes from 0.005 wt% to 8.5 wt%, or to 8.0 wt%, or to 7.0 wt%, or to 7.5 wt%, or to 6.5 wt%, or to 6.0 wt%, or to 5.5 wt%, or to 5.0 wt%, or to 4.5 wt%, or to 4.0 wt%, or to 3.5 wt%, or to 3.0 wt%, or to 2.5 wt%, or to 2.0 wt%, or to 1.5 wt%, or to 1.0 wt%, or to 0.9 wt%, or to 0.8 wt%, or to 0.7 wt%, or to 0.6 wt%, or to 0.5 wt%, of the fluoropolymer component.

In certain aspects the fibrillated fluoropolymer includes polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, ethylene chlorotrifluoroethylene, or a combination thereof.

In particular aspects the encapsulating polymer includes a styrene-acrylonitrile copolymer, an acrylonitrile-butadiene-styrene copolymer, an alpha-alkyl-styrene-acrylonitrile copolymer, an alpha-methylstyrene-acrylonitrile copolymer, a styrene-butadiene rubber, acrylic, polymethyl methacrylate, or a combination thereof.

In a specific aspect the fibrillated fluoropolymer includes polytetrafluoroethylene.

In further aspects the fibrillated fluoropolymer encapsulated by an encapsulating polymer includes styrene-acrylonitrile copolymer encapsulated polytetrafluoroethylene (PTFE).

In some aspects the ratio of styrene to acrylonitrile (S/AN) in the styrene-acrylonitrile copolymer may be from 60/40 to 90/10, or in specific aspects from 70/30 to 80/20. The ratio of SAN to PTFE in the SAN copolymer encapsulated PTFE may vary from 70/30 to 30/70, or from 60/40 to 40/60, or in certain aspects may be about 50/50.

In some aspects the composition has a viscosity, measured at a 100 reciprocal seconds (1/s), of between 30 pascal·seconds (Pa·s) and 100 Pa·s, as determined in accordance with ISO 11443 at a temperature of 280 °C.

The composition may further include a colorant including a dye. The dye may include, but is not limited to: coumarin 460 (blue); coumarin 6 (green); nile red; lanthanide complex; hydrocarbon or substituted hydrocarbon dye; polycyclic aromatic hydrocarbon dye; oxazole dye; oxadiazole dye; aryl- or heteroaryl-substituted poly (C2-8) olefin dye; carbocyanine dye; indanthrone dye; phthalocyanine dye; oxazine dye; carbostyryl dye; napthalenetetracarboxylic acid dye; porphyrin dye; bis(styryl)biphenyl dye; acridine dye; anthraquinone dye; cyanine dye; methine dye; arylmethane dye; azo dye; indigoid dye; thioindigoid dye; diazonium dye; nitro dye; quinone imine dye; aminoketone dye; tetrazolium dye; thiazole dye; perylene dye; perinone dye; bis-benzoxazolylthiophene (BBOT); triarylmethane dye; xanthene dye; thioxanthene dye; naphthalimide dye; lactone dye; fluorophore; 7-amino-4-methylcoumarin; 3-(2'-benzothiazolyl)- 7-diethylaminocoumarin; 2-(4-biphenylyl)-5-(4-t-butylphenyl)-1,3,4-oxadiazole; 2,5-bis-(4- biphenylyl)-oxazole; 2,2'-dimethyl-p-quaterphenyl; 2,2-dimethyl-p-terphenyl; 3,5,3"",5""-tetra-t- buty1-p-quinquephenyl; 2,5-diphenylfuran; 2,5-diphenyloxazole; 4,4'-diphenylstilbene; 4-dicyanomethy lene-2-methy 1-6-(p-dimethylaminostyry 1)-4H-pyran; 1,1 '-diethyl-2,2'-carbocyanine iodide; 3,3'-diethyl-4,4',5,5'-dibenzothiatricarbocyanine iodide; 7-dimethylamino- 1-methyl-4-methoxy-8-azaquinolone-2; 7-dimethylamino-4-methylquinolone-2; 2-(4-(4- dimethylaminophenyl)-1,3-butadienyl)-3-ethylbenzothiazolium perchlorate; 3-diethylamino-7- diethyliminophenoxazonium perchlorate; 2-(1-naphthyl)-5-phenyloxazole; 2,2'-p-phenylen- bis(5-phenyloxazole); rhodamine 700; rhodamine 800; pyrene; chrysene; rubrene; coronene; or combinations thereof.

In specific aspects the composition further includes a filler. The filler may include, but is not limited to, clays (including but not limited to polynite, kaolinite, sepiolite, vermiculite, palygorskite and rectorite), nanoclay, carbon black, wood flour either with or without oil, various forms of silica (nanoporous silica, precipitated or hydrated, fumed or pyrogenic, vitreous, fused or colloidal, including common sand), glass, metals, inorganic oxides (such as oxides of the metals in Periods 2, 3, 4, 5 and 6 of Groups Ib, IIb, IIIa, IIIb, IVa, IVb (except carbon), Va, VIIa, VIla and VIII of the Periodic Table), oxides of metals (such as aluminum oxide, titanium oxide, zirconium oxide, titanium dioxide, nanoscale titanium oxide, aluminum trihydrate, vanadium oxide, and magnesium oxide), hydroxides of aluminum or ammonium or magnesium, carbonates of alkali and alkaline earth metals (such as calcium carbonate, barium carbonate, and magnesium carbonate), antimony trioxide, calcium silicate, diatomaceous earth, fuller earth, kieselguhr, mica, talc, slate flour, volcanic ash, cotton flock, asbestos, kaolin, alkali and alkaline earth metal sulfates (such as sulfates of barium and calcium sulfate), titanium, zeolites, wollastonite, titanium boride, zinc borate, tungsten carbide, ferrites, molybdenum disulfide, asbestos, cristobalite, aluminosilicates including Vermiculite, Bentonite, montmorillonite, Na-montmorillonite, Ca-montmorillonite, hydrated sodium calcium aluminum magnesium silicate hydroxide, pyrophyllite, magnesium aluminum silicates, lithium aluminum silicates, zirconium silicates, and combinations comprising at least one of the foregoing fillers.

Aspects of the disclosure include methods for forming the polymer composition described herein. The method includes passing a molten feed composition including the matrix polymer component and the fluoropolymer component through a die to form the polymer composition. The die includes: (a) an entrance section including at least one inlet; (b) an orientation section, the inlet being in fluid communication with the orientation section, the orientation section including a plurality of orientation channels having a channel inlet and a channel outlet; (c) a merging region defining a receiving volume in fluid communication with the outlets of the plurality of orientation channels of the orientation section, the merging region being configured to merge together at least some fluid flows originating from the outlets of the orientation channels of the orientation section; and (d) an exit region in fluid communication with the merging region, the exit region including at least one outlet. At least some of the plurality of orientation channels independently have an elongation ratio of between 2 and 45, the elongation ratio being defined as a ratio of a cross-sectional area of the channel inlet to a cross-sectional area of the channel outlet, and wherein the orientation channels include a hyperbolic-shaped region and a linearly-tapered region. Each of these sections/regions may contribute to the elongation/orientation (e.g., fibrillation) of the materials fed to the dies.

The entrance section may include one or more inlets to the die. An inlet may give rise to a contracted flow, which may be created by a contracting flow channel at the entrance, if present. In the orientation section the shapes of the inlet and outlet may be circular, though this is not a requirement, as the inlet and outlet may be, independently, circular, oblong, polygonal, or otherwise shaped. In the merging region, oriented flows from the orientation section are merged before being communicated to the exit section. In the exit region the merged fibers within the material exit the die under shear flow. An exit region may have a tapered rectangular section so as to form a tape or other cross-section of output. The exit section may include one or more orientation channels, and the exit region may act as an orientation section to apply further elongation/orientation force to the material being processed. The die described herein may be contrasted with conventional die designs in a variety of ways, e.g., that existing die designs that are fitted at the end of extruders do not have a feature creating strong extensional flow field, they only have a shear flow field.

As used herein, "oriented" means an element sharing an alignment (or nearly sharing an alignment) with another element. As one example, an element (e.g., a fibril) may have a major axis that is within about, e.g., 20 degrees of parallel to the corresponding major axis of another fibril. As another example, a region may include a plurality of oriented fibrils, the fibrils all having major axes that are aligned to within about 20 degrees of a particular line in space.

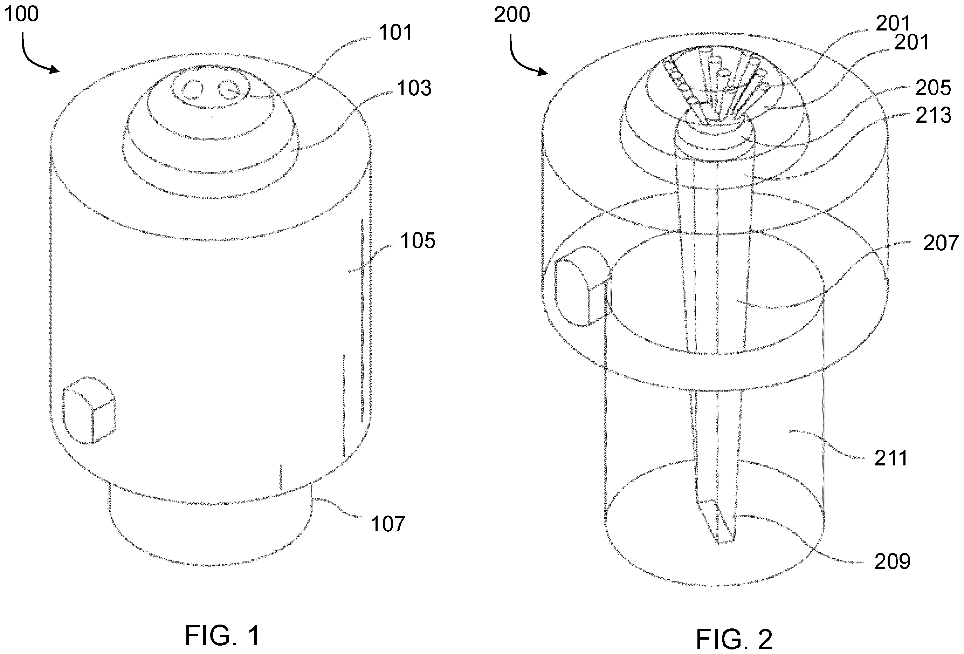

FIG. 1 provides a view of an exemplary die 100 according to the present disclosure. The die 100 may include an entrance section 101, which entrance section includes a hemispherical profile 103. Within die 100 is a merging region 103 and an exit region 107. As described elsewhere herein, the merging region may be configured so as to give rise to extensional or orientation flow in the direction of downward flow through the die (e.g., flow downward from the entrance section 101, into merging region 103, and then into exit region 107 in a vertical direction) as well as extensional or orientation flow that is at least partially transverse to that downward direction.

FIG. 2 provides a cutaway view of die 200. As shown, the die 200 includes orientation channels 203. An orientation channel may include an inlet 201. The orientation channels 203 may terminate at merging region 205. The merging region 205 may define a spherical receiving region. The die 200 may include an exit region 211. Exit region 211 may include an entrance 213 and a tapered region 207. Entrance 213 may interface directly with the merging region 205. Exit region 211 may include an exit 209. Exit 209 may be of a variety of cross-sections, e.g., rectangular.

Orientation channels, merging regions, and exit regions may include smooth walls, but may also include walls that are ridged, stubbled, studded, or otherwise not smooth. Such surface features of the various stages of the die may give rise to flow fields that provide additional extensional or orientational flow.

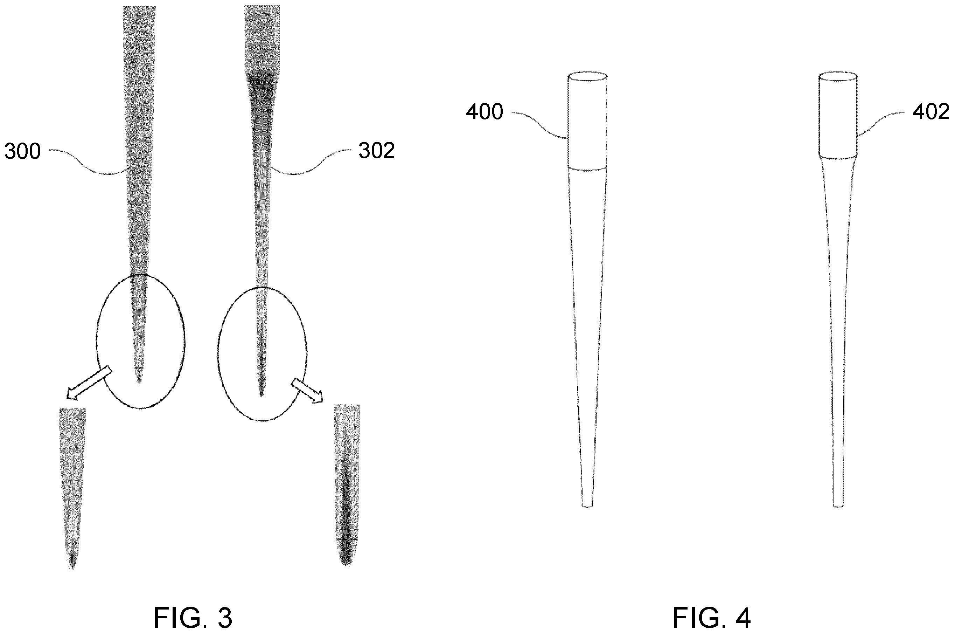

FIG. 3 provides views of a conventional orientation channel 300 and an orientation channel 302 according to aspects of the present disclosure. Standard orientation channel 300 includes a linearly tapering cross-section. Orientation channel 302 includes a flow profile with a hyperbolic geometry. FIG. 3 provides a flow velocity map; as shown in the figure, higher velocity flow is shown by darker color. Orientation channel 302 provides a higher flow velocity, resulting in orientation of the matrix polymer and any reinforcements present in the matrix polymer. Without being bound to any particular theory, it is believed that increased wall stress may also contribute to the orientation.

FIG. 4 illustrates a conventional orientation channel 400 and an orientation channel 402 according to aspects of the present disclosure, which are exterior views of the channels shown in FIG. 3. As shown in FIG. 4, channel 402 includes a hyperbolic entrance.

An orientation channel in a system may be configured to, during operation, impose accumulated strain of, e.g., about 3 to about 4 units over the length of the channel. An orientation channel in a system may also be configured to impose a Hencky strain over the length of the channel of from about 2 to about 8 units, e.g., 2, 2.5, 3, 3.5, 4, 4.5, 5, 5.5, 6, 6.5, 7, 7.5, or even about 8. The foregoing strain levels are not a requirement, but - and without being bound to any particular theory - the foregoing strain levels may give rise to suitable orientation of reinforcement materials disposed within the composition being processed by the die.

Flow profiles with a hyperbolic geometry are considered especially suitable, as they confer a comparatively strong flow profile within an orientation channel. The angle of curvature of the entrance of a hyperbolic-configured channel may vary from 120-150°, where the angle is the angle between a horizontal axis and a line tangent to the hyperbola at the entrance.

The hyperbolic entrance may have a hyperbolic curvature over about 1 to about 95% of the length of the orientation channel, e.g., from 1, to 95%, from 5 to 90%, from 10 to 85%, from 15 to 80%, from 15 to 75%, from 20 to 70%, from 25 to 65%, from 30 to 60%, from 35 to 55%, from 40 to 50%, or even about 45%. An orientation channel may include a hyperbolic-shaped region and a linearly or otherwise tapered region. The diameter of the orientation channel may decrease by from about 1 to about 95% over the length of the hyperbolic or parabolic-shaped region of the orientation channel.

Without being bound to any particular theory, an orientation channel may be configured (i.e., shaped) to impose a particular velocity profile (or wall stress, or both) on fluid that is communicated through the channel in the direction of the merging region. Without being bound to any particular theory, the velocity profile and/or stress act to orient the polymer chains of any polymeric matrix material fed through the die as well as orient reinforcement material that may be present in the feed of matrix material.

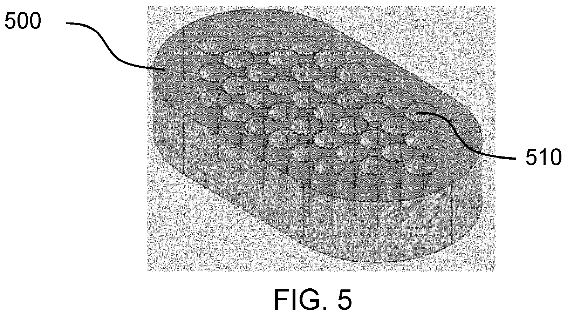

FIG. 5 provides an exemplary scaled-up die 500 including a plurality of orientation channels 510. The die 500 allows for inclusion of different configurations of orientation channels such as those described in the dies herein, and may further be used in combination with a die holder as described below.

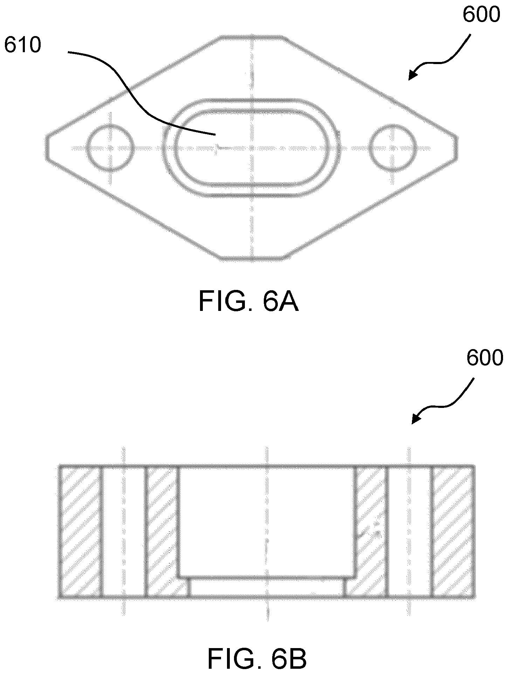

The extruder can in some aspects include a die holder 600 such as that illustrated in FIGS 6A and 6B. The die holder 600 may include a cutout 610 for receiving a die (e.g., die 500) including a plurality of orientation channels that is sized to fit within the die holder 600. The die holder can include any combination and number of the various configurations of orientation channels such as those shown in the dies described herein.

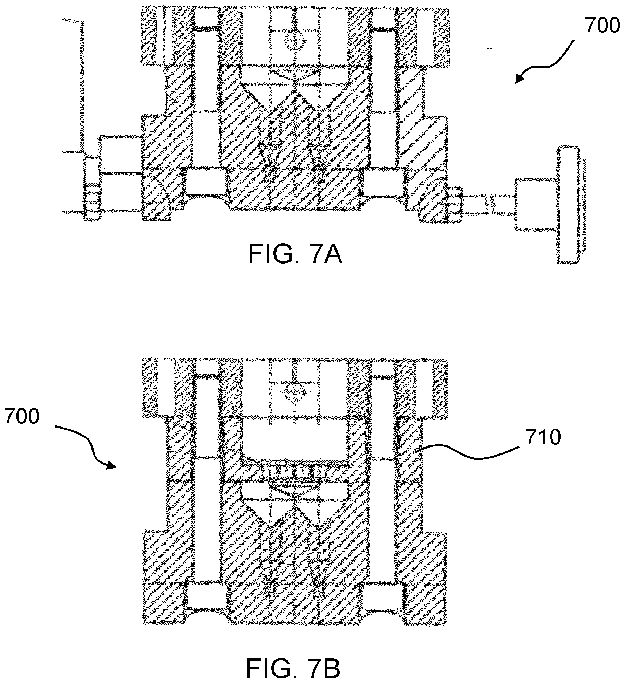

In some aspects the die holder 600 is arranged at a distal end of an extruder. The die holder 600 may be incorporated into the extruder in a similar manner as a conventional breaker-plate assembly, such as shown in FIGS. 7A and 7B which illustrate an extruder die head 700 with a breaker-plate removed (FIG. 7A) and with the breaker-plate 710 inserted (FIG. 7B). The inclusion of a die holder with a plurality of orientation channels allows for a large volume production/throughput of fiber/fibrils.

**Foamed Polymer Compositions**

Aspects of the disclosure further relate to foamed polymer compositions including: a matrix polymer component including polystyrene (PS), copolymers thereof, or a combination thereof; and from 0.003 wt% to 0.15 wt%, based on the weight of the polymer composition, of a fluoropolymer component including a fibrillated fluoropolymer, a fibrillated fluoropolymer encapsulated by an encapsulating polymer, or a combination thereof.

In certain aspects the foamed polymer composition includes from 0.003 wt% to 0.14 wt%, or to 0.13 wt%, 0.12 wt%, or to 0.11 wt%, or to 0.10 wt%, or to 0.09 wt%, or to 0.08 wt%, or to 0.07 wt%, or to 0.06 wt%, or to 0.05 wt%, or to 0.04 wt%, or to 0.03 wt%, or to 0.02 wt%, or to 0.01 wt%, of the fluoropolymer component. In particular aspects the foamed polymer composition includes from 0.004 wt% to 0.15 wt%, or from .005 to 0.15 wt%, or from 0.006 to 0.15 wt%, or from 0.007 to 0.15 wt%, or from 0.008 to 0.15 wt%, or from 0.009 to 0.15 wt%, or from 0.010 to 0.15 wt%, of the fluoropolymer component. In a specific aspect the foamed polymer composition includes from 0.01 wt% to less than 0.1 wt% of the fluoropolymer component.

The foamed polymer composition has an average cell size of from 1 micron ($\mu$m) to 1000 $\mu$m in some aspects. In further aspects the foamed polymer composition has an average cell size of from 1 $\mu$m to 900 $\mu$m, or from 1 $\mu$m to 800 $\mu$m, or from 1 $\mu$m to 700 $\mu$m, or from 1 $\mu$m to 600 $\mu$m, or from 1 $\mu$m to 500 $\mu$m, or from 1 $\mu$m to 400 $\mu$m, or from 1 $\mu$m to 300 $\mu$m, or from 1 $\mu$m to 200 $\mu$m, or from 5 $\mu$m to 1000 $\mu$m, or from 10 $\mu$m to 1000 $\mu$m, or from 15 $\mu$m to 1000 $\mu$m, or from 20 $\mu$m to 1000 $\mu$m.

The foamed polymer composition includes at least 90% closed cells as determined in accordance with EN 13164 in certain aspects. In further aspects the foamed polymer composition includes at least 91% closed cells, or at least 92% closed cells, or at least 93% closed cells, or at least 94% closed cells, or at least 95% closed cells, or at least 96% closed cells, or at least 97% closed cells, or at least 98% closed cells, or at least 99% closed cells.

In some aspects the composition has a specific compressive strength of from 14 to 35 kilopascals per cubic meter (kPa.m$^3$/kg) as determined using a Universal Test Machine in accordance with ISO 844. In other aspects the composition has a specific compressive strength of from 15 to 35 kPa.m$^3$/kg, or from 16 to 35 kPa.m$^3$/kg, or from 17 to 35 kPa.m$^3$/kg, or from 18 to 35 kPa.m$^3$/kg, or from 19 to 35 kPa.m$^3$/kg, or from 16 to 34 kPa.m$^3$/kg, or from 16 to 33 kPa.m$^3$/kg, or from 16 to 32 kPa.m$^3$/kg, or from 16 to 31 kPa.m$^3$/kg.

In certain aspects the composition has a compressive strength of from 400 to 600 kPa as determined using a Universal Test Machine in accordance with ISO 844. In further aspects the composition has a foam density of from 32 to 34.5 kilograms per cubic meter (kg/m$^3$) as determined in accordance with ASTM D792.

The foamed polymer composition may include any of the polystyrene polymers described herein, including GPPS, polystyrene copolymers, and combinations thereof. The foamed polymer composition may include any of the encapsulating polymers described herein. The foamed polymer composition may include any of the fibrillated fluoropolymers described herein.

In further aspects the composition further includes at least one additional additive including a reinforcing filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, foaming nucleant, chemical blowing agent, surfactant, or a combination thereof.

Exemplary foaming and chemical blowing agents include, but are not limited to, talc, azodicarbonamide (ADC), sodium bicarbonate (SBC), and citric acid, isocyanate and water. Chemical blowing agents typically undergo some form of chemical change, including chemical reaction with the material that forms the polymer matrix that causes the release of a gas, such as nitrogen, carbon dioxide, or carbon monoxide. Water is a frequently used blowing agent.

Surfactants may be added to function as cell stabilizers. Exemplary surfactants include, but are not limited, to, DC-193, B-8404, and L-5340 which are, generally, polysiloxane polyoxyalkylene block co-polymers such as those described in U.S. Patent Nos. 2,834,748, 2,917,480, and 2,846,458, and PCT Publication WO2014/015315, each of which is incorporated herein by reference.

In specific aspects the foamed polymer composition further includes a colorant including a dye. The foamed polymer composition may include any of the dyes described herein.

In certain aspects the foamed polymer composition further includes a filler, including but not limited to any of the fillers described herein.

In some aspects the foamed composition further includes a flame retardant including a phosphorous-based flame retardant, a halogenated flame retardant, a halogen-free flame retardant, expandable graphite, or a combination thereof. Exemplary flame retardants include, but are not limited to, triphenyl phosphate (TPP), hexaphenoxycyclotriphosphazene (HPCTP), melamine phosphate (MP), and combinations thereof.

Exemplary halogen-free flame retardants include, but are not limited to, magnesium hydroxide, aluminium hydroxide, expansible black lead, carbon black, trimeric cyanamide, red phosphorus, microcapsule coated red phosphorus, hypo-aluminum orthophosphate, ammonium polyphosphate, isobutyl-hypo-aluminum orthophosphate, phenyl hypo-aluminum orthophosphate, phenyl isobutyl-hypo-aluminum orthophosphate, diethyl hypo-aluminum orthophosphate, triethyl phosphate, tricresyl phosphate propyl ester, tributyl phosphate and trioctyl phosphate. Other exemplary flame retardants include tri(2-chloroethyl)phosphate, tri(2-chloropropyl)phosphate, tri(2,3-dibromopropyl)-phosphate, tri(1,3-dichloropropyl) phosphate, diammonium phosphate, various halogenated aromatic compounds, antimony oxide, aluminum trihydrate, polyvinyl chloride, and the like.

Some aspects of the disclosure relate to methods for making a foamed polymer composition, including: forming a mixture including a matrix polymer component, and from 0.003 wt% to 0.15 wt%, based on the weight of the polymer composition, of a fluoropolymer component; melting the mixture; injecting the melted mixture into a mold; and reducing pressure on the mixture to form the foamed polymer composition. The fluoropolymer component includes a fibrillated fluoropolymer, a fibrillated fluoropolymer encapsulated by an encapsulating polymer, or a combination thereof. In certain aspects the mold is a core-back mold.

Further aspects of the disclosure relate to methods for making a foamed polymer composition, including: forming a mixture including a matrix polymer component, and from 0.003 wt% to 0.15 wt%, based on the weight of the polymer composition, of a fluoropolymer component; melting the mixture; and extruding the mixture in the presence of at least one blowing agent to introduce the at least one blowing agent into the mixture and form the foamed polymer composition. The fluoropolymer component includes a fibrillated fluoropolymer, a fibrillated fluoropolymer encapsulated by an encapsulating polymer, or a combination thereof.

In certain aspects of these methods the matrix polymer component includes polybutylene terephthalate (PBT), polyetherimide (PEI), polyethylene terephthalate (PET), polycarbonate (PC), poly(p-phenylene oxide) (PPO), polystyrene (PS), polyphenylene sulfide (PPS), polypropylene (PP), polyamide (PA), linear low-density polyethylene (LLDPE), low-density polyethylene (LDPE), high density polyethylene (HDPE), polytrimethylene terephthalate (PTT), polyethylene naphthalate (PEN), polybutylene naphthalate (PBN), polylactic acid (PLA), thermoplastic starch (TPS), polycaprolactone (PCL), polyvinyl chloride (PVC), poly(tetramethyleneadipate-co-terephthalate), poly-styrene-block-poly(ethylene-co-butylene)-block-polystyrene (SEBS), acrylonitrile-butadiene-styrene (ABS), styrene butadiene rubber (SBR), styrene graft natural rubber (SNR), styrene-butadiene-styrene (SBS), ethylene-$\alpha$-olefin copolymer (POE), copolymers thereof, or a combination thereof.

The blowing agent may include, but is not limited to, carbon dioxide, pentane, ethanol, dimethylether, isobutane, isopentane, cyclopentane, water, propane, 1,3,3,3-tetrafluoropropene, 2,3,3,3-tetrafluoropropene, acetone, ethyl acetate, butane, trans-1-Chloro-3,3,3-trifluoropropylene, one or more haloalkenes, hydrocarbon (including C1 - C4 hydrocarbons), hydrofluorocarbon (HFC), ether, alcohol (including C1-C4 alcohols including methanol, ethanol, propanol and isopropanol), aldehyde, ketone, methyl formate, formic acid, trans-1,2-dichloroethylene, or combinations thereof.

**Articles Including the Polymer Composition or the Foamed Polymer Composition**

In certain aspects, the present disclosure pertains to shaped, formed, or molded articles including the polymer compositions or foamed polymer compositions. The polymer compositions or foamed polymer compositions can be molded into useful shaped articles by a variety of means such as injection molding, injection foaming, extrusion molding, extrusion foaming, rotational molding, blow molding, sheet forming, pipe extrusion, and thermoforming to form articles and structural components of, for example, a food tray (e.g., deep drawn articles for meat trays, food trays, or cups, or articles for the thermoforming thereof), a component of a construction foam panel (e.g., extruded foam panels for a roof, wall, floor or casing and/or for building construction or vehicle applications), an XPS panel as a component or layer of a composite panel, a component of a sandwich panel, bead foam, a fiber, a film, a sheet, or a molded part.

In some aspects the article has a thickness of from 4 millimeters (mm) to 100 mm. In further aspects the article has a thickness of from 4 mm to 90 mm, or from 4 mm to 80 mm, or from 4 mm to 70 mm, or from 4 mm to 60 mm, or from 4 mm to 50 mm, or from 4 mm to 40 mm, or from 4 mm to 30 mm, or from 4 mm to 20 mm.

In certain aspects the article has a compressive strength of 300 kPa to 400 kPa as determined using a Universal Test Machine in accordance with ISO 844. In particular aspects the article has a density of from 40 kg/m$^3$ to 45 kg/m$^3$ as determined in accordance with ASTM D792. In specific aspects the article has a width of from 900 mm to 1200 mm.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A polymer composition comprising:

a matrix polymer component comprising a polystyrene polymer; and
0.005 wt% to 9 wt. %, based on the weight of the polymer composition, of a fluoropolymer component comprising a fibrillated fluoropolymer, a fibrillated fluoropolymer encapsulated by an encapsulating polymer, or a combination thereof,
wherein the polystyrene polymer has a molecular weight below 193,000 grams per mole (g/mol) as determined according to gel permeation chromatography (GPC) using polystyrene standards,
wherein the polystyrene polymer has a Vicat softening temperature above 90 °C as tested in accordance with ISO 306/B50, and
wherein the polymer composition has a tensile modulus between 3300 and 3800 Megapascals (MPa) as tested in accordance with ISO 527.

Aspect 2. The polymer composition according to Aspect 1, wherein the polystyrene polymer comprises general purpose polystyrene (GPPS), wherein the GPPS is derived from a styrene monomer.

Aspect 3. The polymer composition according to Aspect 1, wherein the polystyrene polymer comprises a polystyrene copolymer, wherein the polystyrene copolymer comprises at a styrene monomer, a substituted styrene compound, a conjugated 1,3-diene, a metallic comonomer, a polar comonomer, a styrenic copolymer comprising an alkyl methacrylate and a styrene monomer comprising one or more of styrene, alpha-methyl styrene, vinyl toluene, p-methyl styrene, t-butyl styrene, o-chlorostyrene, and vinyl pyridine, or a combination thereof.

Aspect 4. The polymer composition according to Aspect 3, wherein the metallic comonomer is selected from the group consisting of: zinc diacrylate; zinc dimethacrylate; zinc di-vinylacetate; zinc di-ethylfumarate; copper diacrylate; copper dimethacrylate; copper di-vinylacetate; copper di-ethylfumarate; aluminum (III) isopropoxide; aluminum triacrylate; aluminum trimethacrylate; aluminum tri-vinylacetate; aluminum tri-ethylfumarate; zirconium tetraacrylate; zirconium tetramethacrylate; zirconium tetra-vinylacetate; zirconium tetra-ethylfumarate; zirconium (IV) butoxide; and combinations thereof.

Aspect 5. The polymer composition according to any of Aspects 1 to 4, wherein the fibrillated fluoropolymer comprises polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, ethylene chlorotrifluoroethylene, or a combination thereof.

Aspect 6. The polymer composition according to any of Aspects 1 to 5, wherein the encapsulating polymer comprises a styrene-acrylonitrile copolymer, an acrylonitrile-butadiene-styrene copolymer, an alpha-alkyl-styrene-acrylonitrile copolymer, an alpha-methylstyrene-acrylonitrile copolymer, a styrene-butadiene rubber, acrylic, polymethyl methacrylate, or a combination thereof.

Aspect 7. The polymer composition according to any of Aspects 1 to 6, wherein the fibrillated fluoropolymer comprises polytetrafluoroethylene.

Aspect 8. The polymer composition according to any of Aspects 1 to 7, wherein the fibrillated fluoropolymer encapsulated by an encapsulating polymer comprises styrene-acrylonitrile copolymer encapsulated polytetrafluoroethylene.

Aspect 9. The polymer composition according to any of Aspects 1 to 8, wherein the composition has a viscosity, measured at a 100 reciprocal seconds (1/s), of between 30 pascal·seconds (Pa·s) and 100 Pa·s, as determined in accordance with ISO 11443 at a temperature of 280 °C.

Aspect 10. The polymer composition according to any of Aspects 1 to 9, wherein the composition further comprises a colorant comprising a dye.

Aspect 11. The polymer composition according to Aspect 10, wherein the dye is selected from the group consisting of: coumarin 460 (blue); coumarin 6 (green); nile red; lanthanide complex; hydrocarbon or substituted hydrocarbon dye; polycyclic aromatic hydrocarbon dye; oxazole dye; oxadiazole dye; aryl- or heteroaryl-substituted poly (C2-8) olefin dye; carbocyanine dye; indanthrone dye; phthalocyanine dye; oxazine dye; carbostyryl dye; napthalenetetracarboxylic acid dye; porphyrin dye; bis(styryl)biphenyl dye; acridine dye; anthraquinone dye; cyanine dye; methine dye; arylmethane dye; azo dye; indigoid dye; thioindigoid dye; diazonium dye; nitro dye; quinone imine dye; aminoketone dye; tetrazolium dye; thiazole dye; perylene dye; perinone dye; bis-benzoxazolylthiophene (BBOT); triarylmethane dye; xanthene dye; thioxanthene dye; naphthalimide dye; lactone dye; fluorophore; 7-amino-4-methylcoumarin; 3-(2'-benzothiazolyl)- 7-diethylaminocoumarin; 2-(4-biphenylyl)-5-(4-t-butylphenyl)-1,3,4-oxadiazole; 2,5-bis-(4- biphenylyl)-oxazole; 2,2'-dimethyl-p-quaterphenyl; 2,2-dimethyl-p-terphenyl; 3,5,3'''',5'''-tetra-t- butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1 '-diethyl-2,2'-carbocyanine iodide; 3,3'-diethyl-4,4',5,5'-dibenzothiatricarbocyanine iodide; 7-dimethylamino- 1-methyl-4-methoxy-8-azaquinolone-2; 7-dimethylamino-4-methylquinolone-2; 2-(4-(4- dimethylaminophenyl)-1,3-butadienyl)-3-ethylbenzothiazolium perchlorate; 3-diethylamino-7- diethyliminophenoxazonium perchlorate; 2-(1-naphthyl)-5-phenyloxazole; 2,2'-p-phenylen- bis(5-phenyloxazole); rhodamine 700; rhodamine 800; pyrene; chrysene; rubrene; coronene; and combinations thereof.

Aspect 12. The polymer composition according to any of Aspects 1 to 11, wherein the composition further comprises a filler.

Aspect 13. The polymer composition according to Aspect 12, wherein the filler is selected from the group consisting of: clay; nanoclay; carbon black; wood flour; silica; nanoporous silica; glass; metal; inorganic oxide; metal oxide; hydroxides of aluminum or ammonium or magnesium; carbonates of alkali or alkaline earth metals; antimony trioxide; calcium silicate; diatomaceous earth; fuller earth; kieselguhr; mica; talc; slate flour; volcanic ash; cotton flock; asbestos; kaolin; alkali or alkaline earth metal sulfate; titanium; zeolite; polynite; kaolinite; sepiolite; vermiculite; palygorskite; rectorite; wollastonite; titanium boride; zinc borate; tungsten carbide; ferrites; molybdenum disulfide; asbestos; cristobalite; aluminosilicate; Bentonite; montmorillonite; Na-montmorillonite; Ca-montmorillonite; hydrated sodium calcium aluminum magnesium silicate hydroxide; pyrophyllite; magnesium aluminum silicate; lithium aluminum silicate; zirconium silicate; and combinations thereof.

Aspect 14. The polymer composition according to any of Aspects 1 to 13, wherein the composition further comprises a polymer component comprising polybutylene terephthalate (PBT), polyetherimide (PEI), polyethylene terephthalate (PET), polycarbonate (PC), poly(p-phenylene oxide) (PPO), polystyrene (PS), polyphenylene sulfide (PPS), polypropylene (PP), polyamide (PA), linear low-density polyethylene (LLDPE), low-density polyethylene (LDPE), high density polyethylene (HDPE), polytrimethylene terephthalate (PTT), polyethylene naphthalate (PEN), polybutylene naphthalate (PBN), polylactic acid (PLA), thermoplastic starch (TPS), polycaprolactone (PCL), polyvinyl chloride (PVC), poly(tetramethyleneadipate-co-terephthalate), poly-styrene-block-poly(ethylene-co-butylene)-block-polystyrene (SEBS), acrylonitrile-butadiene-styrene (ABS), styrene butadiene rubber (SBR), styrene graft natural rubber (SNR), styrene-butadiene-styrene (SBS), ethylene-α-olefin copolymer (POE) copolymers thereof, or a combination thereof.

Aspect 15. A method for forming the polymer composition according to any of Aspects 1 to 14, the method comprising passing a molten feed composition comprising the matrix polymer component and the fluoropolymer component through a die to form the polymer composition, wherein the die comprises:

(a) an entrance section comprising at least one inlet;
(b) an orientation section, the inlet being in fluid communication with the orientation section, the orientation section comprising a plurality of orientation channels having a channel inlet and a channel outlet;
(c) a merging region defining a receiving volume in fluid communication with the outlets of the plurality of orientation channels of the orientation section, the merging region being configured to merge together at least some fluid flows originating from the outlets of the orientation channels of the orientation section; and
(d) an exit region in fluid communication with the merging region, the exit region comprising at least one outlet,

wherein at least some of the plurality of orientation channels independently have an elongation ratio of between 2 and 45, the elongation ratio being defined as a ratio of a cross-sectional area of the channel inlet to a cross-sectional area of the channel outlet, and wherein the orientation channels include a hyperbolic-shaped region and a linearly-tapered region.

Aspect 16. An article comprising the polymer composition according to any of Aspects 1 to 15, wherein the article comprises a food tray, a construction foam panel, bead foam, a fiber, a film, a sheet, or a molded part.

Aspect 17. The article according to Aspect 16, wherein the article is formed by a process comprising injection molding, injection foaming, extrusion foaming, sheet forming, or pipe extrusion.

**EXAMPLES**

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein were prepared using the materials listed in Table 1:

**Table 1** - **Components**

| Component | Description | Supplier |
|---|---|---|
| GPPS 2.4 | Polystyrene Crystal 1160 GPPS, MFI 2.4 per ISO 1133H at 200 °C and 5 kg, Vicat 101 °C per ISO 306/B50 | Total Energies |
| GPPS 2.4 Milled | Milled GPPS, MFI 2.4, MFI 2.4 per ISO 1133H at 200 °C and 5 kg, Vicat 101 °C per ISO 306/B50 | SABIC |
| GPPS 7 | Polystyrene Crystal 1450n GPPS, MFI 7 per ISO 1133H at 200 °C and 5 kg, Vicat 101 °C per ISO 306/B50 | Total Energies |
| GPPS 1.4 | Polystyrene Crystal 1070 GPPS, MFI 1.4 per ISO 1133H at 200 °C and 5 kg, Vicat 101 °C per ISO 306/B50 | Total Energies |
| GPPS 20 | Polystyrene Crystal 1810 GPPS, MFI 20 per ISO 1133H at 200 °C and 5 kg, Vicat 85 °C per ISO 306/B50 | Total Energies |
| GPPS 30 | Polystyrene Crystal 1960n GPPS, MFI 30 per ISO 1133H at 200 °C and 5 kg, Vicat 101 °C per ISO 306/B50 | Total Energies |
| GPPS 660 | STYRON™ 660, general-purpose polystyrene designed for both molding and extrusion applications, MFI 7; Vicat 107 °C per ISO 306/B50 | Trinseo |
| INP449-1000 | SAN coated PTFE, core-shell, D50 400 micron, S/AN 80/20, PTFE/SAN 50/50 | SABIC |
| PTFE | Algoflon DF 210 PTFE, D50 500 micron | Solvay |
| ISAN60 | Inolub ISAN 60, SAN coated PTFE, core-shell, D50 500 micron, S/AN 70/30, PTFE/SAN 60/40 | Gujarat Fluorochemicals Ltd |
| Talc MB | StarCell® PS 60 talc masterbatch for foam extrusion (60 wt% talc in a polystyrene carrier) | Green chemicals |
| FR | Mastertek 7405934bBNA, flame retardant masterbatch containing 40 wt% HBCD-free flame retardant additive in a polystyrene carrier | Campine |

The formulations were dry blended and extruded with a 26 mm Coperion Werner and Pfleiderer ZSK 40 LID co-rotating twin screw extruder with a vacuum vented mixing screw. A breaker plate with die channels designed to maximize extensional flow and fibrillation efficiency was used; the die is described in U.S. Patent Application Publication No. 2021/0008781, the disclosure of which is incorporated herein by this reference in its entirety. The die design used had a DId of 4/1, an angle loft of 120° and L of 9mm. The temperature settings during the compounding trials were: 40-180-220-260-280-280-280-280-280-280 °C with a screw speed of 300 rpm at 10 kg/hr, unless otherwise noted. During the runs the following experimental details were recorded: measured melt temperature, machine reported melt temperature, specific energy consumption, and the torque in % and melt pressure prior the die. The extrudate was cooled with a conveyer belt and water spray prior to pelletization. The nanofibrillated PS formulations were converted in ISO tensile bars on a ENGEL 45 molding machine using the following process conditions: 2 hour pre-drying time; 80 °C pre-drying temperature; 70 °C hopper temperature; 150-260-260 °C zone 1-3 temperatures (respectively); 260 °C nozzle temperature; and 40 °C mold temperature.

Extruded polystyrene (XPS) foams were produced by a KraussMaffei Berstorf Schaumtandex laboratory unit ZE30/KE60 which includes a twin-screw extruder as a primary extruder (plastifiction, additivation and gas nucleation of the polymers and a secondary single-screw extruder for cooling and homogenizing the melt). Polystyrene (STYRON™ 660) was continuously fed into the meltdown extruder to produce a total blend consisting of 100 parts PS. In addition, additives such as talc (0.4 to 0.7 parts) as Masterbatch (StarCell® PS 60) were metered via the feeder. Propellants ($(CO_2)$, ethanol, dimethylether and/or isobutane) were injected into the injection port under pressure. The total throughput including the blowing agents and additives was 35 kg/hr. The propellant-containing melt is cooled in a subsequent cooling extruder and extruded through a slot die. The intumescent melt was withdrawn through a heated belt and heated to a plate by means of a heated calibration, the surfaces of which are equipped with PTFE. Typical plate dimensions before mechanical processing were approximately 300 to 350 mm wide (y direction) and 20 to 40 mm thick (z direction). The foam extrusion processing parameters for ZE30 were: 40-40-190-190-185-185-180-180 °C for zones 0-7 (respectively). The parameters for KE60 were: 80-125-90-180-120-93-93-92-92-92-92-90 °C for zones 10-21; 90 °C for zone 21.1; 90 °C for zone 21.2; 90 for zone 22; and 80 °C for zone 23. Parameters for the main drive for ZE30 and KE60, respectively, were: rotational speed 250/17.5 revolutions per minute (rpm); specific throughput 0.1/2.0 kilograms per hour per rpm (kg/hr/rpm); torque 34/32%; specific energy 0.165-0.21/0.061-0.071 kilowatt hour per kg (kWh/kg); and power 5.8-7/2.1-2.5 kW. Process parameters for ZE30 were: 58 bar for Pressure 1 (P1); 80 bar injection pressure; 102 bar for P2; 199 °C for Temperature 1 (T1). Process parameters for KE60 were: 22 bar for P3; 38 bar for P4; and 107 °C for T2. Haul-off unit line speed was 2.5-5 meters per minute (m/min).

The foamable polymer melt usually contains in the range from 1 to 15% by weight of the at least one blowing agent, preferably in the range from 2 to 10% by weight and particularly preferably in the range from 3 to 8% by weight, in each case based on the total weight the foamable polymer melt. Various physical blowing agents were used such as carbon dioxide ($CO_2$), Ethanol (EtOH), Dimethylether (DME) and Isobutane(iBu). The pressure in the extruder is usually in the range from 20 to 500 bar, preferably in the range from 50 to 400 bar and particularly preferably in the range from 60 to 300 bar.

XPS foam boards were also produced on a larger manufacturing XPS production line with a capacity of 300 to 1500 Kg/h according to the profile set forth above. The boards were produced at a throughput of 300 kg/hr. The foamable polymer melt included from 3-8 wt% of a blowing agent mixture of carbon dioxide, dimethylether and isobutane, in each case based on the total weight the foamable polymer melt.

Melt Volume-flow Rate (MVR) of the pellets was determined according ISO1133 at a specified load and temperature.

Melt Viscosity (MV) of the resins was determined according ISO11443 at various shear rates (1/s, s-1) and temperatures.

Weight averaged molecular weight (Mw), number molecular weight and dispersity (D) (calculated by the ratio of Mw/Mn) were obtained through Gel Permeation Chromatography (GPC). A 20mg sample was dissolved in 20mL dichloromethane along with 250 ppm Toluene as flow marker. The sample was analyzed using GPC at 254nm and using polystyrene standards.

Tensile properties of the injection molded specimens were evaluated according to ISO 527. Three samples were evaluated at the beginning, middle and end of a 10 kg extrusion run.

Cell size was determined by the software Image J using scanning electron microscopy (SEM) micrographs of the XPS foams. At least 70 cells were measured to determine average cell size.

Foam density was determined through a water displacement technique in accordance with ASTM D792 and assuming negligible water uptake.

Thermal conductivities of the foam samples were measured by a heat flow meter LaserComp FOX 50 from TA Instruments. Foam samples were cut into cylinders with a diameter of 60 mm and thicknesses (L) between 3-8 mm depending on the extruded foam thickness. The samples were positioned between two temperature-controlled plates. These plates established a temperature difference (DT) of 10 °C across the samples by setting the upper plate as 30 °C, while the lower plate was set at 20 °C. The resulting heat flux (Q/A) through samples was measured by two proprietary thin film heat flux transducers. Thermal conductivities were calculated according to the equation:

$$\lambda = \frac{Q}{A}\frac{L}{\Delta T}$$

At least five samples from each foam at different positions were measured and average values of the thermal conductivities were determined.

Compression strength of the XPS foams were measured by a Universal Test Machine (Z050, ZwickRoell GmbH and Co. KG, Ulm, Germany) based on ISO 844. Samples for the compression tests were prepared by cutting foams into rectangular specimens with a length of 10 cm and a width of 10 cm. The compression loads were applied perpendicular to the extrusion direction of the foam samples. The compression strain was limited to 30%, which was sufficient to characterize the modulus and plateau stress values for each sample. The test speed was 1 mm/min with a 0.5-N preload to ensure full contact between the sample surfaces and plates of the test machine. At least five samples were tested.

Foam thickness was determined by a caliper according EN13164.

Percentage of closed cells was demined according EN13164.

XPS foam surface quality was visually assessed on both sides. "Poor" quality was indicated by the foam board having a rough, non-smooth surface with cracks through the skin layer. "Good" quality was indicated by the foam board having a smooth skin layer on both sides.

In the last decade fibrillation of PTFE has been explored for various resins. In general, fibrillated PTFE reaches its percolation when added in loadings from 2-5 wt%. Melt tension, storage modulus, modulus, strength, ductility and foam nucleation performance of the matrix reaches its optimum at these levels. As indicated herein, a PTFE loading of 3 wt% was used unless otherwise indicated.

Quantifying the degree of fibrillation and consistency during production is challenging. Differential scanning calorimetry (DSC) and SEM methods cannot assess the degree of fibrillation of a network. It is difficult to quantify and differentiate PTFE fibrils, nodes and crystal signals with DSC. Further, SEM images and EDS analysis (F mapping), CT-scan (statistical image analysis) can generally only show the fibrillar network state and dimension of the fibril locally but not the consistency and degree of fibrillar network in the bulk material. Accordingly, the resulting bulk properties of these fibrillated compositions such as tensile modulus are evaluated to assess the quality and consistency of fibrillation.

### Example 1 - Nanofibrillated PS Masterbatch

Compositions were prepared and tested according to Table 2:

**Table 2** - **Comparative Examples of Nanofibrillated PS**

| Component (wt%) | CE1 | CE2 | CE3 |
|---|---|---|---|
| GPPS 2.4 | | 85 | |
| GPPS 2.4 Milled | 97 | 12 | 97 |
| INP449-1000 | 3 | 3 | 3 |
| | | | |
| Fibrillation die | No | Yes | Yes |
| | | | |
| **Properties** | | | |
| MVR (200 °C, 5 kg) (cc/10 min) | 3,5 | 3.9 | 3,5 |
| MVR (230 °C, 5 kg) (cc/10 min) | 13,1 | | 14,6 |
| MW (g/mol) | 209200 | 219800 | 204400 |
| MV (100 1/s, 240 °C) (Pa.s) | 331 | 101 | 344 |
| MV (200 1/s, 240 °C) (Pa.s) | 230 | 82 | 255 |
| MV (500 1/s, 240 °C) (Pa.s) | 174 | 66 | 172 |
| MV (1000 1/s, 240 °C) (Pa.s) | 118 | 51 | 117 |
| Tensile modulus (MPa) | 3200 | 3300 | 3400 |
| Tensile strength average (MPa) | 42 | 39 | 41 |

As shown in U.S. Patent application publication Nos. 2018/0057653 and 2021/0008781 - the disclosures of which are incorporated herein by this reference in their entirety - a highly nanofibrillated PET material based on 3 wt% TSAN was produced at the provided compositional and process parameters. Screening of various uncoated and coated PTFE sources during extrusion demonstrated that uncoated PTFE sources are not as processable. Significant die swell, known as the Barus effect, occurred when compounding fibrillated PTFE resins; this is caused by elastic deformation of the PTFE. This effect makes stranding of the extruded melt difficult. At 3 wt% TSAN the maximum output is selected to be the output at which no significant amount of material escapes from the vacuum port. It was observed that an increase of TSAN loading reduced the output. To avoid frequent strand breakage, the output was limited to 15 kg/h for the PET-based resins. To enable the extrusion of a 6 wt% TSAN-containing formulation the vacuum port had to be closed. It is hypothesized that the fibril network gets too entangled, forming clusters and resulting in flow obstruction and subsequent reduced fibrillation efficiency. This may cause pressure variance at the die head, causing strand breakage and yield losses during manufacturing. When a general purpose polystyrene was evaluated at the optimal process conditions (see composition CE2 below), a lower throughput of 10 kg/hr was feasible and resulted in the best fibrillation.

To assess the effect of process parameters (throughput, barrel profile/die temperature and fibrillation die) a composition including 3 wt% TSAN in a general purpose polystyrene GPPS2.4 was prepared. It was observed that the series produced with the fibrillation die (compositions CE2 and CE3) did not have a substantially different tensile modulus compared to the comparative examples produced without the modified die (composition CE1) at the same throughput. Similar results were obtained by Bandyopadhyay et al. in ISRN, Vol. 2013, Article ID 837952 (incorporated herein in its entirety by this reference), where a 4 wt% fibrillated TSAN in a general purpose polystyrene (GPPS-Supreme SC203EL, MFI 8 g/10 min) had a tensile modulus of 3192 $\pm$50 MPa.

To enable the industrial use of the nanofibrillated PTFE structures in a polystyrene matrix further optimization and improvements were made to reach the highest degree of fibrillation, improved tensile modulus and increased extrusion throughputs.

Accordingly, further compositions were prepared and tested as shown in Tables 3A and 3B:

**Table 3A** - **Nanofibrillated PS Compositions**

| Component (wt%) | CE1 | IE1 | IE2 | IE3 | IE4 | IE5 | IE6 |
|---|---|---|---|---|---|---|---|
| GPPS 2.4 | | | 85 | | | | |
| GPPS 7 | | 85 | | | | | |
| GPPS 2.4 Milled | 97 | 12 | 12 | 12 | 12 | 12 | 12 |
| GPPS 1.4 | | | | 85 | | | |
| GPPS 20 | | | | | 85 | 85 | |
| GPPS 30 | | | | | | | 85 |
| INP449-1000 | 3 | 3 | 3 | 3 | 3 | 3 | 3 |
| | | | | | | | |
| Fibrillation die | No | No | No | No | No | No | No |
| Throughput, kg/hr, ZSK 26 | 10 | 10 | 10 | 10 | 20 | 10 | 10 |
| | | | | | | | |
| **Property** | | | | | | | |
| MVR (260 °C, 1.2 kg) (cc/10 min) | 3,.5 | 5.9 | 4.6 | 2.7 | 8.3 | 12.2 | - |
| MVR (200 °C, 5 kg) (cc/10 min) | 13.1 | 21.7 | 18.8 | 12.2 | 29.9 | 40.9 | - |
| MW (g/mol) | 209200 | 164000 | 187000 | 217500 | 181300 | 158100 | - |
| MV (100 1/s, 280 °C) (Pa.s) | 331 | 135 | 158 | 212 | 125 | 101 | - |
| MV (200 1/s, 280 °C) (Pa.s) | 230 | 103 | 113 | 155 | 89 | 71 | - |
| MV (500 1/s, 280 °C) (Pa.s) | 174 | 68 | 80 | 102 | 61 | 48 | - |
| MV (1000 1/s, 280 °C) (Pa.s) | 118 | 52 | 61 | 74 | 45 | 38 | - |
| Tensile modulus (MPa) | 3200 | 3250 | 3100 | 3290 | 3180 | 3210 | - |
| Tensile strength average | 42 | 40 | 41 | 40 | 30 | 33 | - |

**Table 3B - Nanofibrillated PS Compositions**

| Component (wt%) | CE3 | IE7 | CE2 | IE8 | IE9 | IE10 | IE11 |
|---|---|---|---|---|---|---|---|
| GPPS 2.4 | | | 85 | | | | |
| GPPS 7 | | 85 | | | | | |
| GPPS 2.4 Milled | 97 | 12 | 12 | 12 | 12 | 12 | 12 |
| GPPS 1.4 | | | | 85 | | | |
| GPPS 20 | | | | | 85 | 85 | |
| GPPS 30 | | | | | | | 85 |
| INP449-1000 | 3 | 3 | 3 | 3 | 3 | 3 | 3 |
| | | | | | | | |
| Fibrillation die | Yes | Yes | Yes | Yes | Yes | Yes | Yes |
| Throughput, kg/hr, ZSK 26 | 10 | 10 | 10 | 10 | 20 | 10 | 10 |
| | | | | | | | |
| **Property** | | | | | | | |
| MVR (260 °C, 1.2 kg) (cc/10 min) | 3.5 | 5.4 | 3.9 | 2.9 | 8.2 | 11.9 | - |
| MVR (200 °C, 5 kg) (cc/10 min) | 14.6 | 23.0 | 16.8 | 15.3 | 31.3 | 40.0 | - |
| MW (g/mol) | 204400 | 163200 | 219800 | 218600 | 180300 | 156900 | - |
| MV (100 1/s, 280 °C) (Pa.s) | 344 | 72 | 101 | 141 | 73 | 35 | - |
| MV (200 1/s, 280 °C) (Pa.s) | 255 | 66 | 82 | 117 | 66 | 36 | - |
| MV (500 1/s, 280 °C) (Pa.s) | 172 | 54 | 66 | 89 | 53 | 36 | - |
| MV (1000 1/s, 280 °C) (Pa.s) | 117 | 45 | 51 | 69 | 40 | 31 | - |
| Tensile modulus (MPa) | 3400 | 3800 | 3300 | 3360 | 3250 | 3260 | - |
| Tensile strength average | 41 | 38 | 39 | 41 | 36 | 33 | - |

Various general purpose polystyrene resins with different Melt Flow Index (MFI) were evaluated using the optimal process settings (10 kg/hr, 300 rpm, 280 °C barrel/die temp) and TSAN type and loading (3 wt% TSAN) in combination with and without the fibrillation die described herein and in as described in US 2021/0008781. Surprisingly, it was found that GPPS resin with a higher MFI resulted in a higher degree of fibrillation and thus higher tensile modulus up to 3900 MPa in combination with the fibrillation die (compare composition IE1 to IE7 and composition IE5 to IE10). It was found that a GPPS resin having an MFI of 7 or higher improved the degree of fibrillation and increased manufacturing throughput (composition IE9).

It would be expected that fibrillation would be improved when the viscosity of matrix resin increases as the capillary number increase according to the following equation:

Improved dispersion when Ca=Ca$_{cr}$ > 4,

$$Ca = \frac{\eta_m \dot{\gamma} R}{\sigma}$$

Ca: capillary number
$\eta_m$: viscosity of matrix polymer
$\dot{\gamma}$: shear rate
R: primary diameter of dispersed phase,
$\sigma$: interfacial tension between matrix and dispersed phase.

The capillary number (Ca) is the ratio between the viscous force and the interfacial force, where the former tends to break the droplet and the latter tends to keep it spherical. According to the equation, the viscosity force tended to break the droplet while the interfacial tension tended to keep the droplet spherical. There was a value of capillary number (Ca$_{cr}$) above which the dispersed polymer will deform or break. When Ca=Ca$_{cr}$ < 0:1, the dispersed polymer does not change, when 0:1 < Ca=Ca_cr < 1, the dispersed polymer begins to deform without breaking, when 1 < Ca=Ca_cr < 4, the dispersed polymer breaks down and only when Ca=Ca_cr > 4, the dispersed polymer will deform into fibrils with high length-diameter ratio. From a processing perspective, shearing field can promote the deformation of the droplet and determine whether PTFE fibrils were formed or not.

According to the present disclosure, surprisingly the opposite trend was observed in function of increased viscosity, as TSAN type (particle size, interfacial tension), loading and shear rate remained constant in these series. However, this increase in shear rate caused die pressure variation resulting in frequent strand breakage during extrusion and poor manufacturability.

Additional compositions were formed and tested as shown in Tables 4A and 4B:

**Table 4A** - **Nanofibrillated PS Compositions with Varying PTFE content and types**

| Component (wt%) | IE12 | IE7 | IE13 | IE14 | IE15 | CE4 |
|---|---|---|---|---|---|---|
| GPPS 7 | 85 | 85 | 85 | 85 | 85 | 85 |
| GPPS 2.4 Milled | 14 | 12 | 10 | 8 | 5 | |
| INP449-1000 | 1 | 3 | 5 | 7 | 10 | 15 |
| ISAN60 | | | | | | |
| PTFE | | | | | | |
| | | | | | | |
| Calculated PTFE content | 0.5 | 1.5 | 2.5 | 3.5 | 5 | 7.5 |
| Fibrillation die | Yes | Yes | Yes | Yes | Yes | Yes |
| Throughput, kg/hr, ZSK 26 | 10 | 10 | 10 | 10 | 10 | 10 |
| | | | | | | |
| **Properties** | | | | | | |
| MVR (260 °C, 1.2 kg) (cc/10 min) | 8.7 | 5.4 | 4.4 | 3.7 | 3.3 | x |
| MVR (200 °C, 5 kg) (cc/10 min) | 40.8 | 23.0 | 19.5 | 14.2 | 14.5 | x |
| MW (g/mol) | 192100 | 163200 | 158200 | 156500 | 152700 | x |
| MV (100 1/s, 280 °C) (Pa.s) | 126 | 72 | 111 | 115 | 129 | x |
| MV (200 1/s, 280 °C) (Pa.s) | 101 | 66 | 95 | 99 | 109 | x |
| MV (500 1/s, 280 °C) (Pa.s) | 71 | 54 | 74 | 77 | 79 | x |
| MV (1000 1/s, 280 °C) (Pa.s) | 52 | 45 | 57 | 61 | 68 | x |
| Pressure variation during MV measurements | Low | Low | Some | High | High | x |
| Tensile modulus (MPa) | 3400 | 3800 | 3572 | 3535 | - | x |
| Tensile strength average (MPa) | 45 | 38 | 25 | 20 | - | x |
| x = no data could be obtained; ND = not determined/evaluated | | | | | | |

**Table 4B** - **Nanofibrillated PS Compositions with Varying PTFE content and types**

| Component (wt%) | IE16 | IE17 | IE18 | IE19 | IE20 | IE21 |
|---|---|---|---|---|---|---|
| GPPS 7 | 85 | 85 | 85 | 85 | 85 | 85 |
| GPPS 2.4 Milled | 14 | 12,5 | 12 | 4,5 | 4 | 13,5 |
| INP449-1000 | | | | | | |
| ISAN60 | 1 | 2,5 | 3 | | | |
| PTFE | | | | 0.5 | 1 | 1.5 |
| | | | | | | |

(continued)

| Component (wt%) | IE16 | IE17 | IE18 | IE19 | IE20 | IE21 |
|---|---|---|---|---|---|---|
| Calculated PTFE content | 0.6 | 1.5 | 1.8 | 0.5 | 1 | 1.5 |
| Fibrillation die | Yes | Yes | Yes | Yes | Yes | Yes |
| Throughput, kg/hr, ZSK 26 | 10 | 10 | 10 | 10 | 10 | 10 |
| | | | | | | |
| **Properties** | | | | | | |
| MVR (260 °C, 1.2 kg) (cc/10 min) | 9.0 | 5.6 | 4.6 | 11.0 | 10.8 | 11.5 |
| MVR (200 °C, 5 kg) (cc/10 min) | | | | | | |
| MW (g/mol) | 17960 0 | 16120 0 | 15850 0 | 18980 0 | 16600 0 | 15780 0 |
| MV (100 1/s, 280 °C) (Pa.s) | ND | 102 | ND | ND | ND | ND |
| MV (200 1/s, 280 °C) (Pa.s) | ND | 83 | ND | ND | ND | ND |
| MV (500 1/s, 280 °C) (Pa.s) | ND | 63 | ND | ND | ND | ND |
| MV (1000 1/s, 280 °C) (Pa.s) | ND | 46 | ND | ND | ND | ND |
| Pressure variation during MV measurements | Low | Low | Low | Low | Low | Low |
| Tensile modulus (MPa) | - | - | - | 3400 | - | 3550 |
| Tensile strength average (MPa) | - | - | - | 42 | - | 34 |
| x = no data could be obtained; ND = not determined/evaluated | | | | | | |

Various TSAN loadings were evaluated in combination with a GPPS resin with MFI 7 (compositions IE12-IE15 and CE4) ranging from 0.5 to 7.5 wt% of calculated PTFE content. As previously noted, MVR is reduced with increased TSAN loading. It was observed during extrusion that more strand breakage occurred during production at higher TSAN loadings. In addition, during the melt viscosity measurements of samples containing more than 5 wt% or more TSAN (compositions IE13, IE14, and IE15) there were some pressure variances as the fibrillar network became too entangled and formed clusters, resulting in flow obstruction. Further, compositions including 15 wt% TSAN could not be processed through extrusion in combination with fibrillation due to strand breakage and the difficulty of chopping strands into pellets. Accordingly, example compositions IE7, IE17, and IE18 including respectively 3 wt% TSAN, 2.5 wt% ISAN60 and 3 wt% ISAN60 were the most optimal compositions for enhanced tensile modulus (higher degree of fibrillation) and processability (minimal pressure variation and excellent stranding). These examples have a calculated PTFE content of 1.5 wt%, 1.5 wt% and 1.8 wt%, respectively. It was observed that higher MFR GPPS resins, in combination with various coated PTFE additives (TSAN, ISAN 60) including different SAN shell compositions, resulted in a higher degree of fibrillation compared to PTFE. However, example compositions IE4, IE5, IE9 and IE10 including a GPPS with a MFR 20 and a Vicat 85 °C did not have these improved tensile modulus properties. Without being bound by theory, it is believed that there is an optimal PS polymer composition and Mw distribution that provides enhanced PTFE fibrillation resulting in increased modulus performance.

Accordingly, in this example it was found that a GPPS resin having a high degree of nanofibrillated PTFE network can be produced during industrial extrusion at high throughputs, minimal pressure variance and limited strand breakage using GPPS resins with a MFI of 7 or higher, an optimal loading of coated PTFE additives and/or specific process parameters (300 rpm, low shear, high die temperature, and a specified fibrillation die). Compositions according to aspects of the disclosure had a range of 0.5 wt% up to 7.5 wt% of a fibrillated fluoropolymer in a low viscous PS matrix. Compositions having a molecular weight below 193000 g/mole had a tensile modulus at or above 3300 MPa, which is significantly higher than previously reported conventional compositions.

### Example 2 - Foam Compositions

Nanofibrillated PTFE PS resins were formed and tested according to Table 5:

**Table 5** - **Nanofibrillated PS Resins**

| Component (wt%) | CE2 | IE7 |
|---|---|---|
| GPPS 2.4 | 85 | |
| GPPS 7 | | 85 |
| GPPS 2.4 Milled | 12 | 12 |
| INP449-1000 | 3 | 3 |
| | | |
| **Properties** | | |
| MVR (260 °C, 1.2 kg) (cc/10 min) | 3.9 | 5.4 |
| MVR (200 °C, 5 kg) (cc/10 min) | 16,8 | 23,0 |
| MW (g/mole) | 219800 | 163200 |
| MV (100 1/s, 280 °C) (Pa.s) | 101 | 72 |
| MV (200 1/s, 280 °C) (Pa.s) | 82 | 66 |
| MV (500 1/s, 280 °C) (Pa.s) | 66 | 54 |
| MV (1000 1/s, 280 °C) (Pa.s) | 51 | 45 |
| Tensile modulus (MPa) | 3300 | 3800 |
| Tensile strength average (MPa) | 39 | 38 |

For this example, two PTFE nanofibrillated PS resins were manufactured with a low and high degree of fibrillation having a modulus of 3300 (CE2) and 3800 MPa (IE7). These different resins were used as a masterbatch during foam extrusion of XPS foam. The foam compositions described herein included from 0.0038 wt% to 0.018 wt% of a highly fibrillated PTFE composition in an XPS foam. The XPS foam compositions achieved a 4.3 % to 9.3% weight saving while retaining mechanical (compressive strength) and thermal insulation performance. Further, these foams could be produced using a mixture of a $CO_2$ containing blowing agent which is a more environmentally friendly production method that avoids the use of fluorinated or alternative blowing agents having a higher Global Warming Potential Impact. It was found that the degree of PTFE fibrillation affects the exerted performance benefits in XPS foams and the optimal dosage required to achieve the desired performance. Specifically, the use a nanofibrillated masterbatch enabled the manufacturing of a more lightweight XPS foam at compressive strengths of 500 kPa, 1100 kPa and 1500 kPa having foam densities of respectively 33, 43 and 51 kg/m³. This represents a 5-10% weight reduction compared to conventional commercially available XPS products.

It is known that mechanical properties of the PS foams affected by factors such as reinforcing effect of additives, orientation of fibrillar additives, the cell opening effect, aspect ratio of the cells and the gas pressure inside the closed-cell foams (See Aksit et al., "Extruded Polystyrene Foams with Enhanced Insulation and Mechanical Properties by a Benzene-Trisamide-Based Additive", Polymers 2019, 11, 268). As reported, Benzene-Trisamide was used as foaming nucleation agent at loadings from 0.1 to 0.5 wt% and included a carbon dioxide (4 wt%)/ethanol (3 wt%) mixture. The compressive strength of the foam was increased from 600kPa to 1600kPa with respective foam densities of from 52.3 to 77.8 kg/m³. The resulting specific compressive strength values ranged between 11.5-20.7 kPa.m³/kg. Specific compression strength was calculated by dividing the compressive strength by the foam density.

XPS foams according to the present disclosure were formed using a different nucleation agent at much lower dosages, resulting in lighter foam densities. Conventional PTFE based materials in polystyrene foams include varying PTFE content (0.1 and 3 wt%) in combination with 30 wt% expanded graphite are described in Amirabadi et al., "Tailoring nanofibrillated polystyrene composite with enhanced fire retarding properties for foam applications," Materials and Design, Volume 214, February 2022, 110419. The foam density of the foams described in this document were calculated by assuming the solid density of the compositions. By using a density of 2.250 g/cc for expanded graphite (EG) and 1 g/cc for polystyrene, a density of 1.375 was calculated using the rule of mixtures for a 30 wt% EG/PS-based material. By using the reported expansion ratio ($\varphi$) and solid density ($\rho_s$), the foam density ($\rho_f$) were calculated according to the formula:

$$\rho_f = \frac{\rho_s}{\varphi}$$

These 30% EG XPS foams have foam densities between 85.9 and 550 kg/m³, they are not of interest for the intended market and application targeted in the present disclosure. The non-fibrillated PS foam in this paper had a compressive strength of 500 kPa and a calculated density of 33 kg/m³, resulting in a specific compressive strength of 15 kPa.m³/kg. In the foams according to aspects of the present disclosure, a different enhanced fibrillated nucleation agent was used allowing for much lower dosages (below 0.1 wt%) resulting in more effective nucleation and foams with lower densities (while retaining compressive strength performance). Furthermore, the foams described in Amirabadi et al. were manufactured using a batch foaming process which is not representative for the extruded polystyrene foams (continuous process) described in the present disclosure.

XPS foams were formed and tested on a manufacturing line (300 kg/hr) by varying the masterbatch type (CE2 and IE7), and masterbatch loading (0.2 to 5 wt%). The resulting XPS foams included from 0.003 wt% to 0.075 wt% nanofibrillated PTFE. First, comparative foams were formed and their properties tested according to Tables 6A and 6B:

**Table 6A - Comparative XPS Foams Including a Poorly Fibrillated PTFE Masterbatch**

| Composition (wt%) | CE4 | CE5 | CE6 | CE7 | CE8 | CE9 |
|---|---|---|---|---|---|---|
| GPPS 660 | 97.6 | 97.3 | 97.3 | 97.7 | 97.8 | 97.65 |
| FR | 2 | 2 | 2 | 2 | 2 | 2 |
| Talc Masterbatch (MB) | 0.40 | 0.70 | 0.70 | 0.00 | 0.00 | 0.00 |
| Fibrillated PTFE MB | 0.00 | 0.00 | 0.00 | 0.30 | 0.20 | 0.35 |
| | | | | | | |
| Line | Mfg | Mfg | Mfg | Mfg | Mfg | Mfg |
| Fibrillated PTFE MB type | None | None | None | CE2 | CE2 | CE2 |
| Calculated talc content in XPS foam (wt%) | 0.24 | 0.42 | 0.42 | 0 | 0 | 0 |
| Calculated PTFE in XPS foam (wt%) | 0 | 0 | 0 | 0.0045 | 0.0030 | 0.0053 |
| | | | | | | |
| **Properties** | | | | | | |
| Compressive strength (kPa) | 380 | 300 | 390 | 360 | 410 | 280 |
| Foam density (kg/m³) | - | 34.8 | 32.8 | - | - | 36.3 |
| Calc. Specific compression strength (kPa.m³/kg) | - | 8.6 | 11.9 | - | - | 7.7 |
| Thermal insulation λ (mW/m.K) | 35 | 31.4 | 32.6 | 34.5 | | |
| Closed cell (%) | >95 | >95 | >95 | >97 | >97 | >97 |
| Foam thickness (mm) | 40 | 20 | 50 | 40 | 40 | 20 |
| Surface quality | Good | Good | Good | Good | Good | Good |
| Mfg = Manufacturing line | | | | | | |

**Table 6B - Comparative XPS Foams Including a Poorly Fibrillated PTFE Masterbatch**

| Composition (wt%) | CE10 | CE11 | CE12 | CE13 | CE14 |
|---|---|---|---|---|---|
| GPPS 660 | 96.5 | 95 | 94 | 93 | 95.9 |
| FR | 2 | 2 | 2 | 2 | 2.4 |
| Talc MB | 0.00 | 0.00 | 0.00 | 0.00 | 1.7 |
| Fibrillated PTFE MB | 1.50 | 3.00 | 4.00 | 5.00 | 0.00 |

(continued)

| Composition (wt%) | CE10 | CE11 | CE12 | CE13 | CE14 |
|---|---|---|---|---|---|
| | | | | | |
| Line | Mfg | Mfg | Mfg | Mfg | Mfg |
| Fibrillated PTFE MB type | CE2 | CE2 | CE2 | CE2 | None |
| Calculated talc content in XPS foam (wt%) | 0 | 0 | 0 | 0 | 0 |
| Calculated PTFE in XPS foam (wt%) | 0.0225 | 0.0450 | 0.0600 | 0.0750 | 1 |
| | | | | | |
| Properties | | | | | |
| Compressive strength (kPa) | 430 | 450 | 560 | 470 | 660 |
| Foam density (kg/m$^3$) | 44.6 | 47.1 | 48.3 | 54.2 | 34.8 |
| Calc. Specific compression strength (kPa.m$^3$/kg) | 9.6 | 9.6 | 11.6 | 8.7 | 19.0 |
| Thermal insulation $\lambda$ (mW/m.K) | 31.4 | | | 31.6 | 35.9 |
| Closed cell (%) | >97 | >97 | >97 | >97 | >95 |
| Foam thickness (mm) | 20 | 20 | 20 | 20 | 40 |
| Surface quality | Good | Good | Good | Good | Poor |
| Mfg = Manufacturing line | | | | | |

As surprisingly demonstrated in these examples, even at low PTFE fibril loading the compressive strength values can be improved (CE10, CE11, CE12, CE13) as compared to conventional talc nucleated foams (CE4, CE5, CE6). However, it was observed that the foam densities did not significantly decrease. This resulted in poor "specific" compressive strength values ranging between 7.7 to 11.6 kPa.m$^3$/kg (CE9 to CE12). The XPS foam with the best specific compressive strength performance (11.9 kPa.m$^3$/kg) was obtained with CE6, a talc-nucleated PS foam. This foam showed a good surface quality. It has been observed that at higher talc loadings (CE14, 1.7wt%), the surface quality of the XPS foam deteriorated due to non-robust foam nucleation behavior during the foam extrusion process resulting in cracks and non smooth skin.

Further XPS foams including a highly fibrillated masterbatch (composition IE7 from Table 5 above) were prepared and tested as shown in Tables 7A and 7B:

### Table 7A - Example XPS foams with Improved Specific Compressive Strength

| Composition (wt%) | IE4 | IE5 | IE6 | IE7 | IE8 | IE9 |
|---|---|---|---|---|---|---|
| GPPS 660 | 97.7 | 97.6 | 97.5 | 97.4 | 97.4 | 97.3 |
| FR | 2 | 2 | 2 | 2 | 2 | 2 |
| Fibrillated PTFE MB | 0.30 | 0.40 | 0.50 | 0.60 | 0.60 | 0.70 |
| | | | | | | |
| Line | Mfg | Mfg | Mfg | Mfg | Mfg | Mfg |
| Fibrillated PTFE MB type | IE7 | IE7 | IE7 | IE7 | IE7 | IE7 |
| Calculated PTFE in XPS foam (wt%) | 0.0045 | 0.0060 | 0.0075 | 0.0090 | 0.0090 | 0.0105 |
| | | | | | | |
| Properties | | | | | | |
| Compressive strength (kPa) | 390 | 440 | 460 | 410 | 480 | 480 |
| Foam density (kg/m$^3$) | 32.8 | 32.9 | 33.2 | 32.4 | 32.8 | 34.4 |

(continued)

| Properties | | | | | | |
|---|---|---|---|---|---|---|
| Specific compression strength (kPa.m$^3$/kg) | 11.9 | 13.4 | 13.9 | 12.7 | 14.6 | 13.9 |
| Thermal insulation $\lambda$ (mW/m.K) | 32.4 | 32.6 | 32.8 | 32.4 | 32.8 | |
| Closed cell (%) | >97 | >97 | >97 | >97 | >97 | >97 |
| Foam thickness (mm) | 50 | 50 | 50 | 50 | 50 | 18 |
| Surface quality | Good | Good | Good | Good | Good | Good |
| Mfg = Manufacturing line | | | | | | |

**Table 7B - Example XPS foams with Improved Specific Compressive Strength**

| Composition (wt%) | IE10 | IE11 | IE12 | IE13 | IE14 |
|---|---|---|---|---|---|
| GPPS 660 | 97 | 96.8 | 96.8 | 96.8 | 97 |
| FR | 2 | 2 | 2 | 2 | 2.4 |
| Fibrillated PTFE MB | 1.00 | 1.20 | 1.20 | 1.20 | 0.6 |
| | | | | | |
| Line | Mfg | Mfg | Mfg | Mfg | Mfg |
| Fibrillated PTFE MB type | IE7 | IE7 | IE7 | IE7 | IE7 |
| Calculated PTFE in XPS foam (wt%) | 0.0150 | 0.0180 | 0.0180 | 0.0180 | 0.0090 |
| | | | | | |
| Properties | | | | | |
| Compressive strength (kPa) | 510 | 360 | 450 | 520 | 540 |
| Foam density (kg/m$^3$) | 34.4 | 32.1 | 32.6 | 33.5 | 36.5 |
| Specific compression strength (kPa.m$^3$/kg) | 14.8 | 11.2 | 13.8 | 15.5 | 14.8 |
| Thermal insulation $\lambda$ (mW/m.K) | 32.6 | | 32.6 | 33.5 | 34.6 |
| Closed cell (%) | >97 | >97 | >97 | >97 | >97 |
| Foam thickness (mm) | 18 | 50 | 50 | 50 | 40 |
| Surface quality | Good | Good | Good | Good | Good |
| Mfg = Manufacturing line | | | | | |

Surprisingly, it was found that when a highly fibrillated masterbatch IE7 was used for forming the XPS foams, improved specific compressive strength values were obtained ranging from 11.9 to 15.5 kPa.m$^3$/kg (IE4 to IE14). As previously noted, a conventional commercial 500 kPa XPS foam has a foam density of 35 kg/m$^3$ resulting in a specific compressive strength of 14.3 kPa.m$^3$/kg. Example composition IE13 has a compressive strength of 520 kPa and a foam density of 33.5 kg/m$^3$, resulting in an improved specific compressive strength performance of 15.5 kPa.m$^3$/kg. This XPS foam composition (IE13) enables a 4.5% weight saving (=(35/33.5*100)-100) versus the conventional 500kPa commercial panel. The thermal insulation properties were not significantly affected through the addition of fibrillated masterbatch as the cell size dimensions remained in the same order of magnitude. To further improve thermal insulation properties of XPS foams, the cell dimensions may need to be at a nanoscale (per Knudsen diffusion law), or alternative fillers (e.g. graphitic microparticles) would need to be added to alter the heat transfer mechanisms by conduction and radiation.

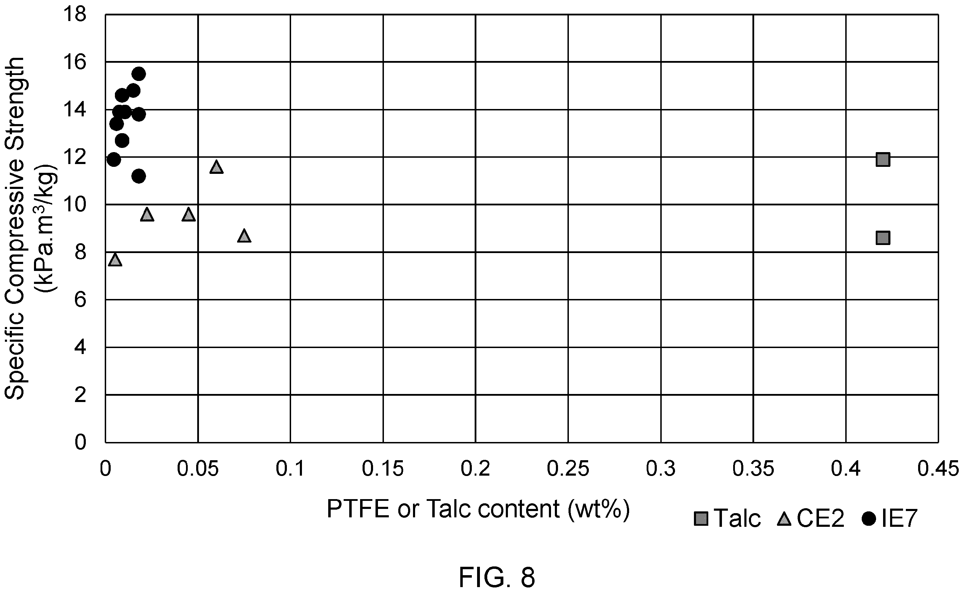

Comparing the Tables 6A-7B graphically with reference to FIG. 8, it can be observed that the IE7 high modulus PTFE masterbatch (having an increased degree of fibrillation) is an efficient XPS foam nucleant compared to a poorly fibrillated PTFE masterbatch CE2. In can be observed that a nanofibrillated PTFE nucleant is more effective versus talc as it is active even at a loading below 0.1 wt% (IE4-IE14).

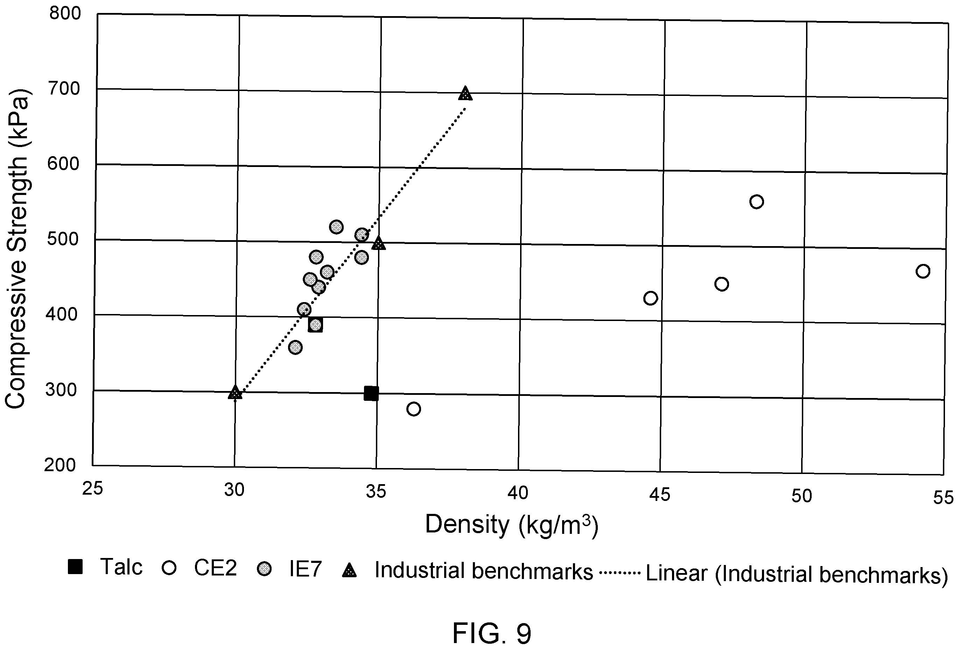

To understand the difference of the disclosed XPS foams based on a highly fibrillated PTFE masterbatch, compressive strength versus density is shown in FIG. 9. As previously discussed, compressive strength of conventional commercial XPS foams linearly increases with foam density due to increased cell wall thickness (see the Industrial Benchmark plots and line in FIG. 9). Surprisingly, it was observed that the IE7 highly fibrillated PTFE masterbatch enabled the production of more lightweight XPS foams, as the produced foams deviate from the trendline in FIG. 9. In contrast, the XPS foams derived from composition CE2 could not reach the high specific compressive strength performance of the IE7 foams.

Thinner XPS foams (12 mm thickness) were produced using talc (composition CE15) and fibrillated PTFE composition IE7 (compositions IE15 to IE17) as the foaming nucleation agent. The foams that were prepared and their properties are shown in Table 8:

**Table 8 - Thin (12 mm) XPS Foams with Improved Specific Compressive Strength**

| Composition (wt%) | CE15 | IE15 | IE16 | IE17 |
|---|---|---|---|---|
| GPPS 660 | 95 | 94.5 | 94.5 | 94.5 |
| FR | 2 | 2 | 2 | 2 |
| Talc MB | 3 | 0 | 0 | 0 |
| Fibrillated PTFE MB | 0 | 3.5 | 3.5 | 3.5 |
| | | | | |
| Line | Mfg | Mfg | Mfg | Mfg |
| Fibrillated PTFE MB type | N/A | IE7 | IE7 | IE7 |
| Calculated PTFE in XPS foam (wt%) | 0 | 0.105 | 0.105 | 0.105 |
| | | | | |
| **Properties** | | | | |
| Compressive strength (kPa) | 250 | 350 | 390 | 424 |
| Foam density (kg/m$^3$) | 42.3 | 40.8 | 42.9 | 50.4 |
| Specific compression strength (kPa.m$^3$/kg) | 5.9 | 8.6 | 9.1 | 8.4 |
| Closed cell (%) | >95 | >97 | >97 | >97 |
| Foam thickness (mm) | 12 | 12 | 12 | 12 |
| Surface quality | Poor | Good | Good | Good |

In conventional thinner and higher density XPS foams, higher nucleation agent loadings up to 1.5 wt% are required to ensure a stable foaming process, consistent cell dimensions, and improved mechanical properties. It has been observed that higher talc loadings will deteriorate the surface quality as exemplified in comparative CE15. Surprisingly, it was found that by using a PTFE fibrillated foaming nucleation agent IE7, various 12mm thick XPS foams could be produced with good surface quality of both skins (top and bottom) and improved compressive strength (IE15 to IE17) compared to CE15. The extruded polystyrene foam manufacturing process forms a natural skin surface hindering the absorbency of moisture. This feature is desired over hot wire sliced thin XPS boards. Thin XPS foam boards with smooth skin surfaces were formed in IE15-IE17. Such compositions are useful in interior construction and furnishings, especially in rooms subject to high moisture levels. In other applications, the natural skins of these XPS boards can be removed through milling, sanding or hot wire slicing and subsequently be coated on both sides to facilitate adhesion/bonding with mortar or plaster.

Additional foam compositions were prepared and tested on a laboratory foam extrusion line as shown in Tables 9A and 9B:

**Table 9A - XPS Foams Produced on a Lab Line**

| Composition | CE16 | CE17 | CE18 | CE19 | IE18 | IE19 | IE20 | CE20 |
|---|---|---|---|---|---|---|---|---|
| GPPS 660 | 97.5 | 97 | 96 | 98 | 97 | 93 | 88 | 98 |
| FR | 2 | 2 | 2 | 2 | 2 | 2 | 2 | 2 |
| Fibrillated PTFE MB | 0 | 0 | 0 | 0 | 1 | 5 | 10 | 0 |

(continued)

| Composition | CE16 | CE17 | CE18 | CE19 | IE18 | IE19 | IE20 | CE20 |
|---|---|---|---|---|---|---|---|---|
| Talc MB | 0.5 | 1 | 2 | 0 | | | | 0 |
| | | | | | | | | |
| Nucleant MB type | Talc | Talc | Talc | None | IE7 | IE7 | IE7 | None |
| Calculated PTFE content (wt%) | 0 | 0 | 0 | 0 | 0.015 | 0.075 | 0.15 | 0 |
| Nucleant loading | 0.3 | 0.6 | 1.2 | 0 | 0.015 | 0.075 | 0.15 | 0 |
| | | | | | | | | |
| Propellant: | | | | | | | | |
| $CO_2$ (wt%) | 1 | 1 | 1 | 0.6 | 1 | 1.2 | 1.2 | 3.5 |
| Isobutane (wt%) | 0 | 0 | 0 | 0 | 0 | 0 | 0 | 1.2 |
| Ethanol (wt%) | 2.7 | 2.7 | 2.7 | 2.7 | 2.7 | 2.9 | 2.9 | 2 |
| Dimethylether (wt%) | 2.5 | 2.5 | 2.5 | 2.9 | 2.5 | 2.7 | 2.7 | 0 |
| | | | | | | | | |
| Properties: | | | | | | | | |
| Compressive strength (kPa) | 300 | 500 | 700 | 255 | 357 | 610 | 671 | 388 |
| Foam density (kg/m$^3$) | 43 | 46 | 53 | 39.4 | 40.7 | 43.4 | 46.4 | 43.9 |
| Specific compression strength (kPa.m3/kg) | 7.0 | 10.9 | 13.2 | 6.5 | 8.8 | 14.1 | 14.5 | 8.8 |
| Thermal insulation $\lambda$ (mW/m.K) | 34 | 34.5 | 35 | 35.9 | 34.9 | 35 | 33.8 | |
| Closed cell (%) | >95 | >95 | >95 | >95 | >97 | >97 | >97 | >95 |
| Cell width (micron) | | | | 571 | 458 | 146 | 147 | |
| Cell height (micron) | | | | 541 | 426 | 172 | 155 | |
| Cell depth (micron) | | | | 578 | 457 | 138 | 90 | |
| Cell size ($\mu$m) microscopy | | | | 770 | 640 | 275 | 135 | |
| Foam thickness (mm) | 27 | 27 | 27 | 27 | 27 | 25 | 25 | 30 |
| ND: Not Determined | | | | | | | | |

**Table 9B - XPS Foams Produced on a Lab Line**

| Composition | IE21 | CE21 | IE22 | IE23 | CE22 | IE24 | IE25 | IE26 |
|---|---|---|---|---|---|---|---|---|
| GPPS 660 | 97 | 98 | 97.5 | 95 | 97 | 99 | 95 | 90 |
| FR | 2 | 2 | 2 | 2 | 2 | 0 | 0 | 0 |
| Fibrillated PTFE MB | 1 | 0 | 0.5 | 3 | 0 | 1 | 5 | 10 |
| Talc MB | | 0 | | | 1 | | | |
| | | | | | | | | |
| Nucleant MB type | IE7 | None | IE7 | IE7 | Talc | IE7 | IE7 | IE7 |
| Calculated PTFE content (wt%) | 0.015 | 0 | 0.007 5 | 0.045 | 0 | 0.015 | 0.075 | 0.15 |
| Nucleant loading | 0.015 | 0.6 | 0.007 5 | 0.045 | 0 | 0.015 | 0.075 | 0.15 |
| | | | | | | | | |

(continued)

| Propellant: | | | | | | | | |
|---|---|---|---|---|---|---|---|---|
| $CO_2$ (wt%) | 3 | 0.45 | 3 | 3 | 3 | 3 | 3 | 3.5 |
| Isobutane (wt%) | 1.2 | 0 | 0 | 0 | 0 | 0 | 0 | 0 |
| Ethanol (wt%) | 2 | 2.1 | 1.6 | 1.6 | 1.6 | 1.6 | 1.6 | 1.6 |
| Dimethylether (wt%) | 0 | 2.25 | 1.8 | 1.8 | 1.8 | 1.8 | 1.8 | 1.8 |
| | | | | | | | | |
| Properties: | | | | | | | | |
| Compressive strength (kPa) | 1530 | 311 | 679 | 1066 | 247 | 972 | 1005 | 568 |
| Foam density (kg/m$^3$) | 50.7 | 45.2 | 49.3 | 60.7 | 41 | 52.4 | 57.1 | 57.1 |
| Specific compression strength (kPa.m3/kg) | 30.2 | 6.9 | 13.8 | 17.6 | 6 | 18.6 | 17.6 | 9.9 |
| Thermal insulation $\lambda$ (mW/m.K) | 33.4 | 36.2 | 33.7 | 35.8 | 35.3 | 34.8 | 35.3 | 34.1 |
| Closed cell (%) | >97 | >97 | >97 | >97 | >97 | >97 | >97 | >97 |
| Cell width (micron) | 113 | | | | | | | 29 |
| Cell height (micron) | 124 | | | | | | | 23 |
| Cell depth (micron) | 71 | | | | | | | 23 |
| Cell size ($\mu$m) microscopy | | | | | | | | |
| Foam thickness (mm) | 26 | 30 | 27 | 25 | 27 | 27 | 27 | 27 |
| ND: Not Determined | | | | | | | | |

Conventional foam compositions (CE16, CE17 and CE18) with a compressive strength of 300, 500 and 700 kPa have higher densities compared to commercially available XPS foams produced on a manufacturing line. Non-talc nucleated XPS foams (CE19, CE20, CE21) had large cells, compressive strength values below 400 kPa, and specific compressive strength values below 9 kPa.m$^3$/kg.

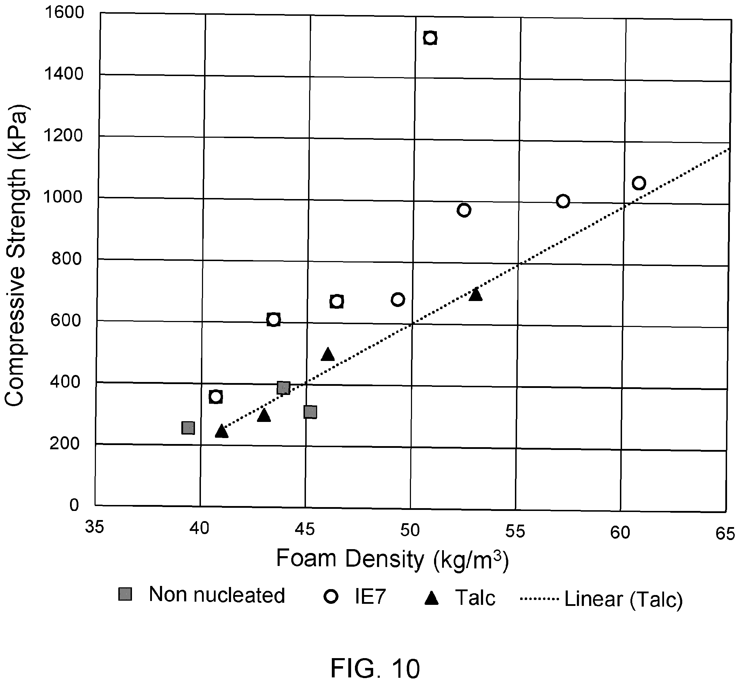

Surprisingly, it was found that XPS foams with high specific compressive strength performance (IE18 to IE26) were achieved using the highly efficient PTFE fibrillated foam nucleants (IE7). More specifically, nanofibrillated PTFE loadings of 0.0075 to 0.15wt% were adequate to achieve these benefits in an XPS foam while maintaining thermal insulation properties. The most optimal XPS foams compared to the talc nucleated benchmarks (CE16, CE17, CE18) were IE19, IE20, IE21 and IE24. The XPS foams according to aspects of the disclosure deviate from the talc nucleated trendline, as illustrated in FIG. 10, demonstrating their lightweight improvements and benefits. This is further demonstrated by their high specific compressive strength values between 14 kPa.m$^3$/kg and 30.2 kPa.m$^3$/kg. Additionally, the fibrillated foam nucleant according to aspects of the disclosure can be used to make XPS foams with a compressive strength performance beyond 700kPa (see IE21, IE23, IE24 and IE25), and up to 1530 kPa. These examples demonstrate that - depending on the blowing agent mixture - the highly PTFE fibrillated foam nucleant may be optimized for the desired weight out benefit.

To summarize, XPS foams with high specific compressive strength performance were developed through the use of highly efficient PTFE fibrillated foam nucleants. More specifically, very low nanofibrillated PTFE loadings of 0.0075 wt% to 0.15 wt% were adequate to achieve these benefits in an XPS foam while maintaining thermal insulation properties.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

**Claims**

1. A polymer composition comprising:

   a matrix polymer component comprising a polystyrene polymer; and
   0.005 wt% to 9 wt. %, based on the weight of the polymer composition, of a fluoropolymer component comprising a fibrillated fluoropolymer, a fibrillated fluoropolymer encapsulated by an encapsulating polymer, or a combination thereof,
   wherein the polystyrene polymer has a molecular weight below 193,000 grams per mole (g/mol) as determined according to gel permeation chromatography (GPC) using polystyrene standards,
   wherein the polystyrene polymer has a Vicat softening temperature above 90 °C as tested in accordance with ISO 306/B50, and
   wherein the polymer composition has a tensile modulus between 3300 and 3800 Megapascals (MPa) as tested in accordance with ISO 527.

2. The polymer composition according to claim 1, wherein the polystyrene polymer comprises general purpose polystyrene (GPPS), wherein the GPPS is derived from a styrene monomer.

3. The polymer composition according to claim 1, wherein the polystyrene polymer comprises a polystyrene copolymer, wherein the polystyrene copolymer comprises at a styrene monomer, a substituted styrene compound, a conjugated 1,3-diene, a metallic comonomer, a polar comonomer, a styrenic copolymer comprising an alkyl methacrylate and a styrene monomer comprising one or more of styrene, alpha-methyl styrene, vinyl toluene, p-methyl styrene, t-butyl styrene, o-chlorostyrene, and vinyl pyridine, or a combination thereof.

4. The polymer composition according to claim 3, wherein the metallic comonomer is selected from the group consisting of: zinc diacrylate; zinc dimethacrylate; zinc di-vinylacetate; zinc di-ethylfumarate; copper diacrylate; copper dimethacrylate; copper di-vinylacetate; copper di-ethylfumarate; aluminum (III) isopropoxide; aluminum triacrylate; aluminum trimethacrylate; aluminum tri-vinylacetate; aluminum tri-ethylfumarate; zirconium tetraacrylate; zirconium tetramethacrylate; zirconium tetra-vinylacetate; zirconium tetra-ethylfumarate; zirconium (IV) butoxide; and combinations thereof.

5. The polymer composition according to any of claims 1 to 4, wherein the fibrillated fluoropolymer comprises polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, ethylene chlorotrifluoroethylene, or a combination thereof.

6. The polymer composition according to any of claims 1 to 5, wherein the encapsulating polymer comprises a styrene-acrylonitrile copolymer, an acrylonitrile-butadiene-styrene copolymer, an alpha-alkyl-styrene-acrylonitrile copolymer, an alpha-methylstyrene-acrylonitrile copolymer, a styrene-butadiene rubber, acrylic, polymethyl methacrylate, or a combination thereof.

7. The polymer composition according to any of claims 1 to 6, wherein the fibrillated fluoropolymer comprises polytetrafluoroethylene.

8. The polymer composition according to any of claims 1 to 7, wherein the fibrillated fluoropolymer encapsulated by an encapsulating polymer comprises styrene-acrylonitrile copolymer encapsulated polytetrafluoroethylene.

9. The polymer composition according to any of claims 1 to 8, wherein the composition has a viscosity, measured at a 100 reciprocal seconds (1/s), of between 30 pascal·seconds (Pa·s) and 100 Pa·s, as determined in accordance with ISO 11443 at a temperature of 280 °C.

10. The polymer composition according to any of claims 1 to 9, wherein the composition further comprises a colorant comprising a dye.

**11.** The polymer composition according to claim 10, wherein the dye is selected from the group consisting of: coumarin 460 (blue); coumarin 6 (green); nile red; lanthanide complex; hydrocarbon or substituted hydrocarbon dye; polycyclic aromatic hydrocarbon dye; oxazole dye; oxadiazole dye; aryl- or heteroaryl-substituted poly (C2-8) olefin dye; carbocyanine dye; indanthrone dye; phthalocyanine dye; oxazine dye; carbostyryl dye; napthalenetetracarboxylic acid dye; porphyrin dye; bis(styryl)biphenyl dye; acridine dye; anthraquinone dye; cyanine dye; methine dye; arylmethane dye; azo dye; indigoid dye; thioindigoid dye; diazonium dye; nitro dye; quinone imine dye; aminoketone dye; tetrazolium dye; thiazole dye; perylene dye; perinone dye; bis-benzoxazolylthiophene (BBOT); triarylmethane dye; xanthene dye; thioxanthene dye; naphthalimide dye; lactone dye; fluorophore; 7-amino-4-methylcoumarin; 3-(2'-benzothiazolyl)- 7-diethylaminocoumarin; 2-(4-biphenylyl)-5-(4-t-butylphenyl)-1,3,4-oxadiazole; 2,5-bis-(4- biphenylyl)-oxazole; 2,2'-dimethyl-p-quaterphenyl; 2,2-dimethyl-p-terphenyl; 3,5,3"",5""-tetra-t- buty1-p-quinquephenyl; 2,5-diphenylfuran; 2,5-diphenyloxazole; 4,4'-diphenylstilbene; 4-dicyanomethy lene-2-methy 1-6-(p-dimethylaminostyry 1)-4H-pyran; 1,1 '-diethyl-2,2'-carbocyanine iodide; 3,3'-diethyl-4,4',5,5'-dibenzothiatricarbocyanine iodide; 7-dimethylamino- 1-methyl-4-methoxy-8-azaquinolone-2; 7-dimethylamino-4-methylquinolone-2; 2-(4-(4- dimethylaminophenyl)-1,3-butadienyl)-3-ethylbenzothiazolium perchlorate; 3-diethylamino-7- diethyliminophenoxazonium perchlorate; 2-(1-naphthyl)-5-phenyloxazole; 2,2'-p-phenylen- bis(5-phenyloxazole); rhodamine 700; rhodamine 800; pyrene; chrysene; rubrene; coronene; and combinations thereof.

**12.** The polymer composition according to any of claims 1 to 11, wherein the composition further comprises a filler selected from the group consisting of: clay; nanoclay; carbon black; wood flour; silica; nanoporous silica; glass; metal; inorganic oxide; metal oxide; hydroxides of aluminum or ammonium or magnesium; carbonates of alkali or alkaline earth metals; antimony trioxide; calcium silicate; diatomaceous earth; fuller earth; kieselguhr; mica; talc; slate flour; volcanic ash; cotton flock; asbestos; kaolin; alkali or alkaline earth metal sulfate; titanium; zeolite; polynite; kaolinite; sepiolite; vermiculite; palygorskite; rectorite; wollastonite; titanium boride; zinc borate; tungsten carbide; ferrites; molybdenum disulfide; asbestos; cristobalite; aluminosilicate; Bentonite; montmorillonite; Na-montmorillonite; Ca-montmorillonite; hydrated sodium calcium aluminum magnesium silicate hydroxide; pyrophyllite; magnesium aluminum silicate; lithium aluminum silicate; zirconium silicate; and combinations thereof.

**13.** The polymer composition according to any of claims 1 to 12, wherein the composition further comprises a polymer component comprising polybutylene terephthalate (PBT), polyetherimide (PEI), polyethylene terephthalate (PET), polycarbonate (PC), poly(p-phenylene oxide) (PPO), polystyrene (PS), polyphenylene sulfide (PPS), polypropylene (PP), polyamide (PA), linear low-density polyethylene (LLDPE), low-density polyethylene (LDPE), high density polyethylene (HDPE), polytrimethylene terephthalate (PTT), polyethylene naphthalate (PEN), polybutylene naphthalate (PBN), polylactic acid (PLA), thermoplastic starch (TPS), polycaprolactone (PCL), polyvinyl chloride (PVC), poly(tetramethyleneadipate-co-terephthalate), poly-styrene-block-poly(ethylene-co-butylene)-block-polystyrene (SEBS), acrylonitrile-butadiene-styrene (ABS), styrene butadiene rubber (SBR), styrene graft natural rubber (SNR), styrene-butadiene-styrene (SBS), ethylene-α-olefin copolymer (POE) copolymers thereof, or a combination thereof.

**14.** A method for forming the polymer composition according to any of claims 1 to 13, the method comprising passing a molten feed composition comprising the matrix polymer component and the fluoropolymer component through a die to form the polymer composition, wherein the die comprises:

(a) an entrance section comprising at least one inlet;
(b) an orientation section, the inlet being in fluid communication with the orientation section, the orientation section comprising a plurality of orientation channels having a channel inlet and a channel outlet;
(c) a merging region defining a receiving volume in fluid communication with the outlets of the plurality of orientation channels of the orientation section, the merging region being configured to merge together at least some fluid flows originating from the outlets of the orientation channels of the orientation section; and
(d) an exit region in fluid communication with the merging region, the exit region comprising at least one outlet,

wherein at least some of the plurality of orientation channels independently have an elongation ratio of between 2 and 45, the elongation ratio being defined as a ratio of a cross-sectional area of the channel inlet to a cross-sectional area of the channel outlet, and wherein the orientation channels include a hyperbolic-shaped region and a linearly-tapered region.

**15.** An article comprising the polymer composition according to any of claims 1 to 14, wherein the article comprises a food tray, a construction foam panel, bead foam, a fiber, a film, a sheet, or a molded part,
wherein the article is formed by a process comprising injection molding, injection foaming, extrusion foaming, sheet forming, or pipe extrusion.

201
201
205
213
207
211
209
200

FIG. 2

101
103
105
107
100

FIG. 1

FIG. 3

FIG. 4

EP 4 421 114 A1

FIG. 5

FIG. 6A

FIG. 6B

FIG. 7A

700

FIG. 7B

700

710

FIG. 8

EP 4 421 114 A1

FIG. 9

EP 4 421 114 A1

FIG. 10

Europäisches Patentamt
European Patent Office
Office européen des brevets

# EUROPEAN SEARCH REPORT

**Application Number**

EP 23 15 7681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/124281 A1 (SHPP GLOBAL TECH BV [NL]) 24 June 2021 (2021-06-24) * paragraphs [0008] – [0010], [0048] – [0064], [0067] – [0075], [0082] – [0087], [0093] * | 1-15 | INV. C08J9/00 C08L25/04 |
| L | WO 2018/122747 A1 (SABIC GLOBAL TECHNOLOGIES BV [NL]) 5 July 2018 (2018-07-05) * the whole document * | 14 | ADD. C08J9/12 C08J9/14 |
| X | US 7 557 154 B2 (SABIC INNOVATIVE PLASTICS IP [NL]) 7 July 2009 (2009-07-07) * column 2, lines 10-35 * * column 2, line 65 – column 3, line 50 * * column 11, line 41 – column 14, line 39 * * column 15, lines 8-42 * * column 18, line 64 – column 19, line 65 * | 1-15 | |
| X | WO 2009/137626 A1 (SABIC INNOVATIVE PLASTICS IP [NL]; ZHU YANTAO [US] ET AL.) 12 November 2009 (2009-11-12) * paragraphs [0018] – [0019], [0049] – [0055], [0063], [0065] – [0069], [0077] – [0078], [0082] – [0084], [0100] – [0101], [0012] * | 1-15 | TECHNICAL FIELDS SEARCHED (IPC) C08J C09J C08L |
| X | WO 2021/124278 A1 (SHPP GLOBAL TECH BV [NL]) 24 June 2021 (2021-06-24) * paragraphs [0008] – [0010], [0023], [0046] – [0054], [0068] – [0074], [0083] – [0088] * | 1-15 | |

The present search report has been drawn up for all claims

| Place of search | Date of completion of the search | Examiner |
|---|---|---|
| The Hague | 13 July 2023 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 15 7681

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2023

| Patent document cited in search report | | Publication date | Patent family member(s) | | Publication date |
|---|---|---|---|---|---|
| WO 2021124281 | A1 | 24-06-2021 | CN | 115003737 A | 02-09-2022 |
| | | | EP | 3838972 A1 | 23-06-2021 |
| | | | EP | 4077501 A1 | 26-10-2022 |
| | | | KR | 20220114586 A | 17-08-2022 |
| | | | US | 2023041985 A1 | 09-02-2023 |
| | | | WO | 2021124281 A1 | 24-06-2021 |
| WO 2018122747 | A1 | 05-07-2018 | CN | 110248795 A | 17-09-2019 |
| | | | EP | 3562645 A1 | 06-11-2019 |
| | | | KR | 20190099306 A | 26-08-2019 |
| | | | US | 2021008781 A1 | 14-01-2021 |
| | | | WO | 2018122747 A1 | 05-07-2018 |
| US 7557154 | B2 | 07-07-2009 | NONE | | |
| WO 2009137626 | A1 | 12-11-2009 | CN | 102076766 A | 25-05-2011 |
| | | | EP | 2276809 A1 | 26-01-2011 |
| | | | US | 2008242789 A1 | 02-10-2008 |
| | | | WO | 2009137626 A1 | 12-11-2009 |
| WO 2021124278 | A1 | 24-06-2021 | CN | 114981345 A | 30-08-2022 |
| | | | EP | 3838973 A1 | 23-06-2021 |
| | | | EP | 4077500 A1 | 26-10-2022 |
| | | | US | 2023020844 A1 | 19-01-2023 |
| | | | WO | 2021124278 A1 | 24-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10160843 B
- US 9914814 B
- US 2834748 A
- US 2917480 A
- US 2846458 A
- WO 2014015315 A
- US 20210008781
- US 20180057653
- US 20210008781 A

**Non-patent literature cited in the description**

- **DEMIRTAS et al.** Extrusion Foaming of High Impact Polystyrene: Effects of Processing Parameters and Materials Composition. *Int J Mater Sci Res.,* 2018, vol. 1 (1), 9-15
- **BANDYOPADHYAY et al.** *ISRN,* vol. 2013
- **AKSIT et al.** Extruded Polystyrene Foams with Enhanced Insulation and Mechanical Properties by a Benzene-Trisamide-Based Additive. *Polymers,* 2019, vol. 11, 268
- **AMIRABADI et al.** Tailoring nanofibrillated polystyrene composite with enhanced fire retarding properties for foam applications. *Materials and Design,* February 2022, vol. 214, 110419